# EUROPEAN PATENT APPLICATION

(11) **EP 2 341 474 A1**
(43) Date of publication of application: **06.07.2011**
(21) Application number: 11000028.8
(22) Date of filing: 04.01.2011
(51) Int. Cl.: G06Q 10/00

(54) **Modularized service level agreement reporting**

(30) Priority: 04.01.2010 US 651540
(71) Applicant: Accenture Global Services Limited, Dublin 4 (IE)
(72) Inventor: Lamm, Kevan Warren, Gainesville, FL 32607 (US)
(74) Representative: Müller-Boré & Partner Patentanwälte

(57) **Abstract**

Methods, systems, and apparatus, including computer programs encoded on a computer storage medium, for playing local device information over a telephone connection. In one aspect, a method includes selecting one or more data modules from among a collection of reusable data modules, the selected data modules collectively mapping to one or more requirements of a service level agreement report, and the selected data modules including tags that reference data stored in two or more data sources and further including instructions for processing the data; invoking the data modules; processing the data referenced by the tags using the instructions, responsive to invoking the data modules; and generating the SLA report in accordance with the requirements, using the processed data.

## Description

### TECHNICAL FIELD

The present disclosure generally relates to automatic report generation.

### BACKGROUND

When a client establishes a relationship with a service provider, a service contract may be drawn up detailing the parameters of the service to be provided to the client. A service level agreement (SLA) is a portion of the service contract in which services are defined and service goals and performance thresholds are established. These goals and performance thresholds can include metrics regarding individual services provided by the service provider, priorities regarding the provision of services, lists of responsibilities the service provider is accountable for during service provision, and any guarantees or warranties the service provider makes to the client regarding the performance of service provisioning.

Historically, SLAs have been created between telecommunication providers and their customers. However, many other types of service providers are now demonstrating quality and value of service to clients through the establishment of a SLA. In some examples, outsourcing relationships, manufacturing suppliers, training organizations, financial services organizations, emergency response organizations, transportation providers, and safety and security contractors may choose to enter into a SLA with clients to officially document both service provider obligations and client expectations.

To track the performance of a service provider in meeting or exceeding the obligations and expectations outlined within the SLA, the service provider may generate periodic SLA reports. The nature and content of the SLA reports, in some implementations, is determined between the service provider and the client.

### SUMMARY

In general, one innovative aspect of the subject matter described in this specification may be embodied in a SLA reporting system that includes reusable modules which include tags for pulling data from vastly different types of data sources, where the data requires reformatting for compatibility purposes. When invoked in a sequence defined by a user, the system uses the reusable modules to obtain the data, and to use the data to generate a SLA report in accordance with particular reporting requirements.

In general, another innovative aspect of the subject matter described in this specification may be embodied in methods that include the actions of selecting one or more data modules from among a collection of reusable data modules, the selected data modules collectively mapping to one or more requirements of a service level agreement report, and the selected data modules including tags that reference data stored in two or more data sources and further including instructions for processing the data; invoking the data modules; processing the data referenced by the tags using the instructions, responsive to invoking the data modules; and generating the SLA report in accordance with the requirements, using the processed data. Other embodiments of this aspect include corresponding systems, apparatus, and computer programs, configured to perform the actions of the methods, encoded on computer storage devices.

These and other embodiments may each optionally include one or more of the following features. For instance, the actions may include mapping the requirements of the SLA report to the selected data modules. The one or more requirements may include a first requirement which specifies that a particular metric is to be provided in the SLA report, where the particular metric may be obtained using data from a first data source and using data from a second data source. The one or more requirements may include a first requirement which specifies that a particular query result is to be provided in the SLA report, where the particular query result may be obtained using data from a first data source and using data from a second data source. The two or more data sources may be different types of data sources, and may be two or more of a learning management system (LMS), an online survey database, and a standalone spreadsheet. Processing the data using the instructions may further include importing the data from the two or more data sources referenced by the tags.

In other embodiments, selecting the data modules may further include selecting a first data module and a second data module that collectively map to a first requirement of the SLA report, and selecting the first data module and a third data module that collectively map to a second, different requirement of the SLA report. Processing the data may further include mapping data from a first data source to data from the second data source, and generating a query result using the mapped data. Processing the data may further include performing a filtering operation on the query result, performing an ordering operation on the query result, performing a grouping operation on the query result, and/or performing a counting operation on the query result. The actions may also include obtaining a threshold value that has been entered by a user, and performing a thresholding operation on the query result. The actions may include receiving a user input specifying an order in which the data modules are to be invoked, where the data modules may be invoked in the order specified by the user input.

In other embodiments, processing the data may further include performing a collating operation on the query result. The actions may include providing the SLA report for display. Processing the data may further include generating a first result of processing the data referenced by the tags using the instructions included in a first data module, generating a second result of processing the first result using the instructions included in a second data module, generating a third result of processing the second result using the instructions included in a third data module, and providing the third result, as the processed data. The actions may further include using the at least a portion of the selected data modules and one or more other data modules of the collection to generate a second SLA report in accordance with different requirements.

The details of one or more embodiments of the subject matter described in this specification are set forth in the accompanying drawings and the description below. Other potential features, aspects, and advantages of the subject matter will become apparent from the description, the drawings, and the claims.

### BRIEF DESCRIPTION OF DRAWINGS

Referring now to the drawings, in which like reference numbers represent corresponding parts throughout:

FIG. 1 is a conceptual diagram of a system for generating a SLA report through the use of reusable data modules which each map to one or more SLA requirements;

FIG. 2 is a process flow diagram illustrating a method for generating a SLA report through the use of reusable data modules;

FIG. 3 is an exemplary architecture for generating SLA reports through the use of reusable data modules;

FIG. 4 is a flow chart illustrating one method in accordance with various general implementations;

FIG. 5 is an example course list data set;

FIG. 6 is an example level one results data set;

FIG. 7 is an example level two results data set;

FIG. 8 is an example instructor feedback data set;

FIGS. 9A-9D illustrate a first reusable data module retrieving information fulfilling a first requirement related to a SLA;

FIGS. 10A-10F illustrate a first common reusable data module retrieving information corresponding to data needed by one or more additional reusable data modules;

FIGS. 11A-B illustrate a second reusable data module retrieving information fulfilling a second requirement related to a SLA;

FIGS. 12A-B illustrate a third reusable data module retrieving information fulfilling a third requirement related to a SLA;

FIGS. 13A-D illustrate a fourth reusable data module retrieving information fulfilling a fourth requirement related to a SLA;

FIGS. 14A-C illustrate a fifth reusable data module retrieving information fulfilling a fifth requirement related to a SLA;

FIG. 15 illustrates a sixth reusable data module retrieving information fulfilling a sixth requirement related to a SLA;

FIGS. 16A-B illustrate a second common reusable data module retrieving information corresponding to data needed by one or more additional reusable data modules;

FIGS. 17A-B illustrate a seventh reusable data module retrieving information fulfilling a seventh requirement related to a SLA;

FIGS. 18A-B illustrate an eighth reusable data module retrieving information fulfilling an eighth requirement related to a SLA;

FIGS. 19A-B illustrate a ninth reusable data module retrieving information fulfilling a ninth requirement related to a SLA;

FIGS. 20A-B illustrate a tenth reusable data module retrieving information fulfilling a tenth requirement related to a SLA;

FIGS. 21A-B illustrate an eleventh reusable data module retrieving information fulfilling an eleventh requirement related to a SLA;

FIGS. 22A-B illustrate a twelfth reusable data module retrieving information fulfilling a twelfth requirement related to a SLA;

FIG. 23 is a schematic diagram of an exemplary computer system.

### DETAILED DESCRIPTION

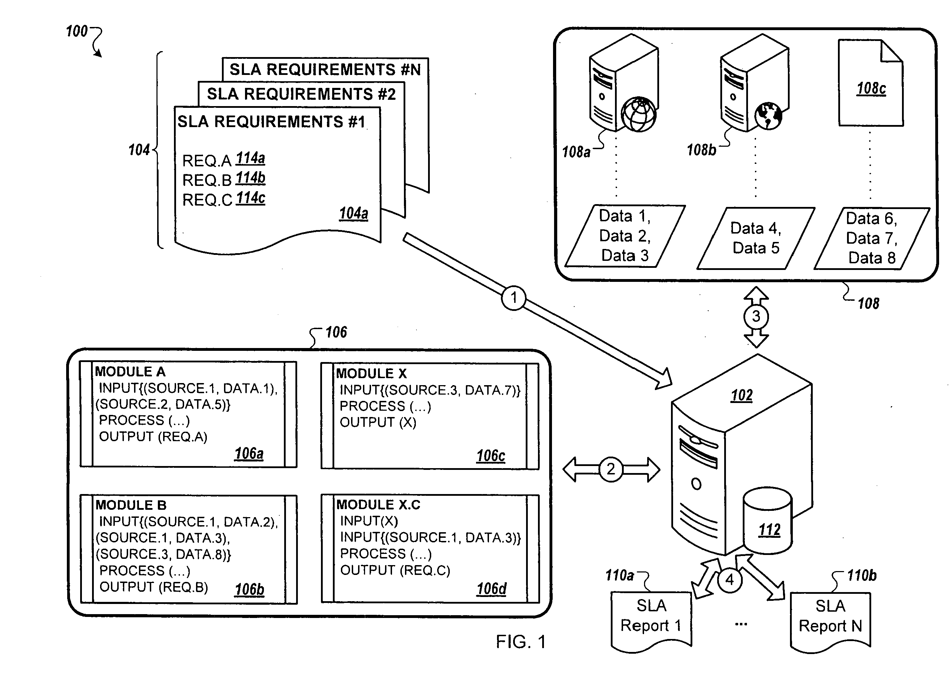

FIG. 1 is a conceptual diagram of a SLA reporting system 100 for generating a service level agreement (SLA) report through the use of reusable data modules which each map to one or more SLA reporting requirements. Briefly, the reusable data modules include tags for pulling data from vastly different types of data sources (e.g., where the data requires reformatting for compatibility purposes). When invoked in a sequence defined by a user, the system 100 uses the reusable data modules to obtain the data, and to use the data to generate a SLA report in accordance with the particular SLA reporting requirements.

The SLA reporting requirements, for example, can describe service goals which a service provider has agreed to provide to a client. These service goals can be used by the client to monitor the performance of the service provider. In an example process, a server 102 receives one or more lists of SLA requirements 104, each list of requirements 104, for example, corresponding to a SLA established between a service provider and an individual client. The server 102 maps individual requirements to one or more data modules 106. The data modules 106 include instructions for accessing one or more sets of data 108, as well as instructions for processing the retrieved data sets. The server 102 uses the output achieved by running the individual modules 106 to generate a set of SLA reports 110.

The SLA requirements 104 can encompass a variety of information. In some examples, the SLA requirements 104 can include generating a tally of events, calculating threshold achievement data, and ranking or comparing performance metrics. In the example of a telecommunication network SLA agreement, one requirement can include a tally of the total amount of time of network inaccessibility during a time period (e.g., week, month, quarter, year, etc.). This total network outage data, in turn, can be used by another requirement to verify threshold achievement (e.g., network availability 99.999% of the time). In the example of a learning management system, an example requirement includes the pass rate of participants per available class within a particular timeframe, while another requirement compares the pass rate of students receiving instruction using a first format (e.g., real-time presenter) to those receiving instruction using a second format (e.g., self-paced computerized training). In some implementations, the SLA requirements 104 can additionally include the reporting of historical data (e.g., prior month, quarter, or year) in comparison to current data.

In some implementations, in addition to listing data requirements, the SLA requirements lists 104 can include requirements regarding the formatting of information, the scheduling of SLA report generation, or the distribution method of the SLA report(s). For example, the SLA requirements list 104a can indicate that data matching requirements A and B (Fig. 1, "REC. A" and "REC. B," respectively) be provided on a monthly basis, while data matching requirement C (Fig. 1, "REC. C") be provided on a quarterly basis. The data matching requirement C, in another example, can be requested in graphical (e.g., pie chart, bar graph, etc.) format, while the data matching requirements A and B can be requested in text format. A particular output template (e.g., spreadsheet, web page, word processing document, etc.), in another example, can be included within the list of requirements 104a.

As illustrated within these examples, the requirements listed within each requirement list 104 can each map to one or more data modules 106. The server 102 matches the requirements for a given SLA requirements list 104 with a subset of the data modules 106 which fulfill those requirements. The data modules 106, at a high level, can include import instructions which collect data from a variety of sources (e.g., one or more types of database systems, spreadsheet documents, etc.), processing instructions which sanitize and combine the collected data, and output instructions which indicate the output format (e.g., ranking, percentage, threshold, ordering, etc.) of the data. For example, import instructions can include tags that reference data stored in two or more data sources. Processing instructions, in some examples, can include performing a filtering operation, an ordering operation, a grouping operation, a collating operation, or a counting operation. The server 102 executes the modules mapping to an individual SLA requirements list when generating a SLA report.

Upon execution, the server 102 retrieves data from various data sources 108. The data sources 108 can include different processing platforms, database platforms, or other computing systems. The data sources 108, for example, can include a learning management system server 108a, a web server 108b, and a spreadsheet document 108c. The data sources, in some examples, can be accessed by the server 102 directly (e.g., the spreadsheet 108c can be stored within a local storage device 112) or through wired or wireless (e.g., network) connection. In some implementations, different data sources 108 store the data in different formats. For example, a first spreadsheet can list network switches in field format, while a second spreadsheet lists network switches in row format. The data modules 106, for example, include processing actions for manipulating the data collected from the various data sources 108 such that the information can be combined in a meaningful way.

After the server 102 has retrieved the data, the data is processed according to instructions contained within the data modules 106, and the resultant SLA reports 110 are generated. The SLA reports 110, for example, can include a variety of report formats. In some implementations, the report format can depend in part upon the information within the SLA requirements 104. For example, the requirements can be listed in the order in which they are to be presented within the SLA report. In other implementations, the report format can include a word processing document template, a web-based portal template, or other mechanism to display the processed data for consumption by a client or application.

When a client enters a SLA with a service provider, for example, the parties can agree to a report format including the list of SLA requirements 104a. The list of SLA requirements 104a, for example, can include data metrics allowing the client to monitor the performance of the service provider in providing the service to the client. These data metrics, for example, can include a first requirement REQ.A 114a, a second requirement REQ.B 114b, and a third requirement REQ.C 114c, as illustrated within a first list of requirements 104a.

The list of SLA requirements 104a can be provided to the server 102. For example, the requirements can be uploaded directly (e.g., removable disk drive), entered directly (e.g., user interface), or distributed through a local or remote network to the server 102. The server 102 can map each of the requirements 114 to one or more data modules 106. The first requirement REQ.A 114a can be mapped to a first data module 106a, the second requirement REQ.B 114b can be mapped to a second data module 106b, and the third requirement REQ.C 114c can be mapped to a combination of a third data module 106c and a fourth data module 106d.

The third data module 106c can be described as an interim data module, collecting and, optionally, processing data from various sources in preparation for use with one or more additional data modules. For example, the third data module 106c collects data DATA.7 from data source SOURCE.3 and processes this data in some manner to produce output data X. The fourth data module 106d uses the output data X, in combination with the input data DATA.3 from data source SOURCE.1 to fulfill the third requirement REQ.C 114c.

In some implementations, an interim data module can be used to sanitize data collected from diverse data sources before presenting the data to a processing data module. For example, in typical use, data X provided to the fourth data module 106d may originate from the learning management server 108a (e.g., web-based survey results). However, in some cases, (e.g., on-site training without network availability, migration of data from one database to the next, network failure during a learning presentation), the data may instead be available through a spreadsheet (e.g., the spreadsheet 108c). The data module 106d can receive data X from any interim module which collects and sanitizes the data to a format expected by the data module 106d.

An interim data module, in some implementations, can be used to process data for use by multiple other data modules. For example, the third data module 106c can collect the data DATA.7 from data source SOURCE.3, process the data in some manner, and provide the processed output data X to the fourth data module 106d as well as one or more other data modules. For example, one data module can use the output data X to group information collected from one or more data sources, while another data module can use the output data X to calculate threshold percentages related to the output data X and, optionally, other data.

Upon successful execution of the data modules 106, the server 102 generates a SLA report 110a. The SLA report 110a, for example, can provide information corresponding to the outputs of the first module 106a, the second module 106b, and the fourth module 106d. This information, in turn, can be delivered to the client or another application. The information within the SLA report 110a can include text data and graphical displays of the data calculated by one or more of the data modules 106a, 106b, or 106d.

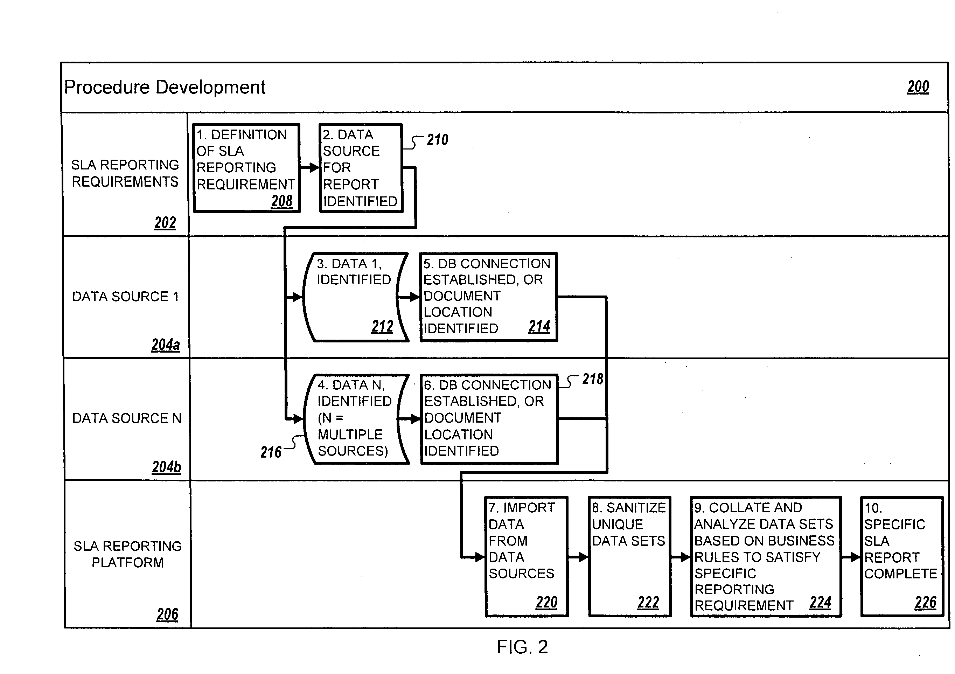

FIG. 2 is a process flow diagram illustrating a method 200 for generating a SLA report through the use of reusable data modules. The method 200 describes an exemplary series of actions used when first defining a SLA report and generating the report. The series of actions are broken down into three categories: SLA reporting requirements 202, data sources 204, and a SLA reporting platform 206. In some implementations, each category can be accomplished using a different computing system. For example, the SLA reporting requirements 202 can be developed upon a first computing system, the individual data sources 204 can each be available on different computing systems or a combination thereof, and the SLA reporting platform 206 can be executed upon another computing system. In other implementations, the SLA reporting requirements 202, the SLA reporting platform 206, and one or more of the data sources 204 can be included within a single computing system.

Within the SLA reporting requirements category 202, SLA reporting requirements are defined (208). These reporting requirements, for example, can map to individual data summarizations or statistics regarding the performance of the service provider. Requirements can additionally include, in some examples, scheduling limitations (e.g., quarterly, bi-monthly, etc.), threshold limitations (e.g., every customer service response call which resulted in greater than two minutes on hold), or comparison limitations (e.g., a percentage difference between the present month and the former month). The SLA reporting requirements, in one example, can be defined within a SLA reporting requirement list (e.g., text document, spreadsheet, web-based form, etc.) such as the SLA requirements 104 as described in relation to FIG. 1. The individual requirements can then be mapped to one or more reusable data modules.

One or more data sources for the report are identified (210). The data sources, for example, can be based in part upon the particular client associated with the SLA report, the type(s) of service(s) being provided for the particular client, or the depth of information requested by the client. The data sources can include one or more web servers, structured query language (SQL) databases, learning management system (LMS) servers, or other digital repository storing one or more data sets within a defined format. The data sources, in some examples, can be defined by content type (e.g., SQL database, Excel spreadsheet, etc.), structure (e.g., database table format, spreadsheet row and field format, etc.), and accessibility instructions (e.g., login information for a data server, uniform resource locator (URL) of a web server, storage location of a spreadsheet, etc.).

For each of the individual SLA reporting requirements, one or more data sources are identified. For example, based upon an individual reporting requirement, one or more data sources containing data needed to fulfill that requirement is identified. In some implementations, tags within reusable data modules contain instructions on importing data from data sources.

Within the first data source category 204a, for example, a first data source is identified (212). In some implementations, one or more requirements can be fulfilled using a single data source. For example, a requirement related to the number of help desk tickets opened via email in the past month can be fulfilled by summing help desk ticket entries initiated via email within a data server, data warehousing repository, or spreadsheet. If a later requirement relates to the number of help desk tickets opened via a telephone call to a help desk member, this information can likely also be derived from a single data source. In some implementations, data sources for each requirement are identified prior to downloading data. In this manner, data can be downloaded once and used for fulfilling multiple requirements. In other implementations, data can be downloaded immediately unless it is found that the same data has previously been downloaded for the fulfillment of a different requirement. As illustrated within the method 200, a database connection can be established, for example, or a document location can be identified as the source location for the first data set (214).

In some implementations, one or more requirements can be fulfilled through the combination of two or more data sets. In this case, multiple data sets can be imported from a single data source or multiple data sources. For example, two or more data sets imported when generating the previous SLA report may be imported from the same cache of historic data, or two data sets may be imported from diverse data sources. Within the second data source category 204b, for example, multiple data sources are identified (216). In one example, a SLA requirement can pertain to problem resolution within an information technology (IT) department. A web server data source can include entries having employee identifiers, open ticket timestamp, and close ticket timestamp, while an employee records database can include a department identifier associated with each employee identifier. To fulfill a requirement related to grouping the average time to resolution for IT department tickets opened by various departments within an organization, data derived from the web server data source can be cross-referenced with data derived from the employee records database data source. Once the two or more data sources have been identified, individual database connections can be established or individual document locations identified (218).

After the data sources have been identified, data can be imported from the data sources (220) within the SLA reporting platform category 206. In some implementations, all of the database tables or spreadsheets containing the identified data can be imported to the SLA reporting platform. For example, a full spreadsheet document can be downloaded from a networked server by the SLA reporting platform 206. In other implementations, data can be selectively imported from the data sources. For example, if a requirement can be fulfilled using a single data source, a query can be run against that database to retrieve the information corresponding to the SLA reporting requirement.

The imported data, retrieved as unique data sets with potentially differing formatting styles, can be sanitized (222). For example, data from various databases, spreadsheet documents, or text documents can be mapped to a standard format such as a local relational database management system or a spreadsheet application. If, for example, data records are stored by field in one spreadsheet data source and by row in another spreadsheet data source, the fields-based spreadsheet data source can be mapped to rows or vice-versa. In another example, if a timestamp is stored in YYYY-MM-DD format in one data source and in DD-MM-YYYY format in another data source, the timestamps can be reformatted to a matching format. The goal of the sanitization, for example, can be to assemble the various data sources into a format which can provide the SLA reporting platform 206 with a convenient manner to combine data from different sources or to assert queries against data from different sources.

The sanitized data sets can be collated and analyzed based upon business rules to satisfy specific reporting requirements (224). In some examples, a filtering operation, an ordering operation, a grouping operation, a collating operation, or a counting operation can be performed upon the data sets. If a threshold value has been included within a data module or entered by a user for use by a data module, the threshold value can be used to perform a thresholding operation on one or more data sets. In one example, queries can be run against data sets copied to a relational database platform to satisfy one or more of the SLA reporting requirements 202. In another example, data within a spreadsheet application can be collated, filtered, or otherwise manipulated to fulfill a reporting requirement.

In satisfying a specific reporting requirement, in some implementations, the output data results (e.g., query results or spreadsheet manipulation) can be formatted to comply with instructions provided within the SLA reporting requirements 202. For example, the order of fields within output records (e.g., last name first versus last name last), the order of the output records (e.g., alphabetical order, incrementing order of timestamp, etc.), the letter case within each field of output record (e.g., all capitalized, first letter capitalized, etc.) or other particular formatting can be addressed at this time.

The SLA report can now be completed (226). In some examples, the SLA report data can be imported into a word processing document, formatted into a spreadsheet report, or uploaded to a web-based report document. If desired, one or more output data sets can be used to generate graphical analyses for use within the SLA report. In some implementations, the report data can be archived for later use (e.g., as comparison data for future SLA reports).

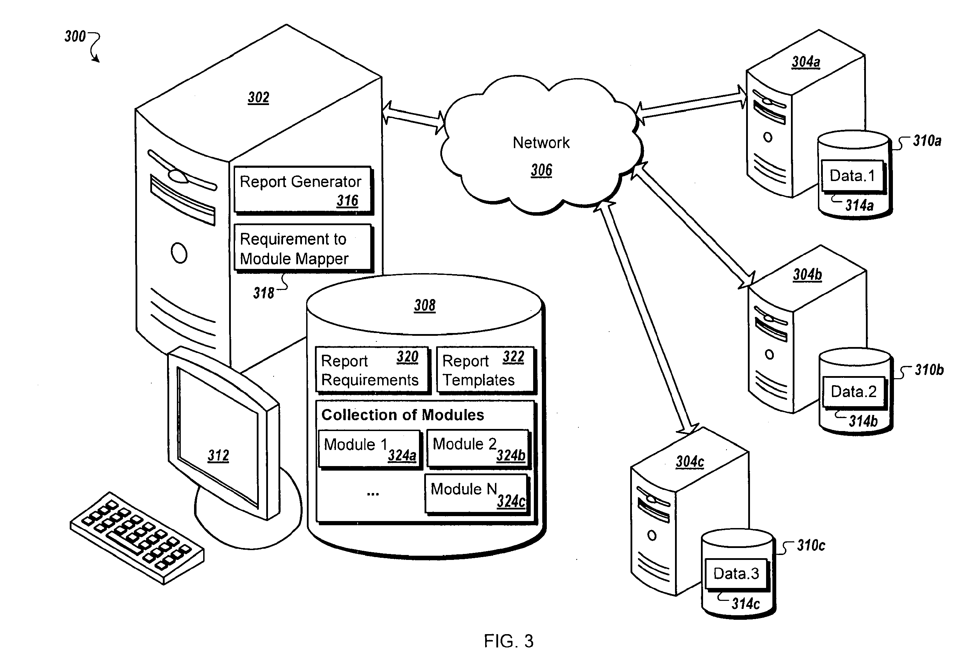

FIG. 3 is an exemplary architecture 300 for generating SLA reports through the use of reusable data modules. A service provider, for example, can access a SLA reporting platform server 302 to generate one or more SLA reports for one or more clients using data collected during the provision of client services. Based upon individualized SLA report requirements, the SLA reporting platform server 302 can access one or more data sets, either locally from an attached storage medium 308 or through a device connected to a network 306, such as a client device 304a, a client device 304b, or a client device 304c. The SLA reporting platform server 302 can then manipulate the data sets via a report generator application 316 to produce an automated, customized SLA report.

The customized SLA report can be defined by establishing a set of SLA report requirements 320, such as the SLA requirements 104 as described in relation to FIG. 1. Each SLA requirement within the SLA report requirements 320, for example, maps to statistics or data metrics (e.g., a value, collection of values, or collection of records) which can be derived using one or more of the data sets 314a, 314b, or 314c. The SLA report requirements 320 can be created within the SLA reporting platform server 302 or uploaded to the SLA reporting platform server 302 (e.g., through an input device such as a user interface 312 or over the network 306).

In some implementations, the SLA requirements 320 (e.g., a list or spreadsheet or other data structure) are selected from a list of suggested metrics. For example, the service provider, based upon the SLA agreement established with a particular client, can map client expectations and performance goals to a variety of standard metrics (e.g., using a form, selecting from a list, or inputting by hand). In other implementations, the SLA requirements 320 are automatically generated based upon the contents of the SLA agreement (e.g., as part of creating a SLA agreement document). Other implementations are possible.

A requirements to module mapper application 318 can be used to map requirements within the SLA requirements 320 to various data modules 324. The data modules 324, for example, each define a method of accessing and manipulating data from one or more of a set of data sources 310a, 310b, or 310c to generate one or more metrics corresponding to one or more individual requirements.

The data modules 324 contain instructions for collecting data from the client devices 304. Each client device 304, in some implementations, represents a different data storage platform. In some examples, a first client device 304a may be a web server, a second client device 304b may be a database server, and a third client device 304c may be a learning management system server. The data stored within each of the client devices 304, similarly, can be stored as various data file formats within various storage technologies. Although each client device 304 is illustrated as including a single storage medium (e.g., the data sources 310), in other implementations, a single data set can span multiple storage mediums, or a single storage medium can include two or more data sets.

In some implementations, two or more of the data modules 324 can correspond to the same metric. For example, a first client, whose data is stored within a spreadsheet format, can use data module 324a to generate metric X, while a second client, whose data is stored within a SQL database, can use data module 324b to generate metric X. In some implementations, the data modules 324 can include interim data modules which collect and sanitize data for use by one or more other data modules to generate one or more metrics. If, for example, data for a particular metric is stored within a SQL database or a spreadsheet format depending upon circumstances, a first interim data module can collect and sanitize data.X from the database data source, while a second interim data module can collect and sanitize data.X from the spreadsheet data source. A third data module can receive the sanitized data.X from either the first interim data module or the second interim data module and generate the metric X. In another example, a first interim data module can collect and sanitize data.Y which can be made available to a second data module which generates the metric ZY and a third data module which generates the metric XY.

The requirements to module mapper application 318, in some implementations, generates an execution script which contains instructions to execute the reusable data modules 324 mapping to the SLA requirements 320. In some implementations, the requirements to module mapper application 318 combines the instructions of the mapped data modules 324 into a master data module which, when executed, collects and manipulates data to generate the metrics defined by the SLA requirements 320.

While the requirements to module mapper application 318 is illustrated as a stand-alone application, in some implementations the requirements to module mapper application 318 is included within the report generator application 316. For example, each time a report is generated, the report generator 316 can execute the requirement to module mapper 318 to map the SLA requirements 320 to corresponding data modules 324. If the data modules 324 are frequently updated (e.g., the access methods for the client devices 304 change periodically), for example, it may be useful to map data modules to requirements each time a new SLA report is generated.

A user can execute the report generator 316 through the local user interface 312 or by logging into the SLA reporting platform server 302 over the network 306 to generate a SLA report. In some implementations, SLA report generation is executed automatically on a scheduled basis. For example, an execution script can be developed to generate a SLA report upon a schedule established between the service provider and the customer.

The report generator 316 executes the data modules 324 mapped to the SLA requirements 320 (e.g., mapped previously or in real time) to generate a SLA report. In some implementations, execution of the report generator 316 includes selection of a report template 322 for formatting the data metrics generated by the data modules 324. In other implementations, a default report format can be used, or the selected report template 322 can be specified during the execution of one or more of the data modules 324 (e.g., within the execution commands of the individual data module 324).

The output of the report generator, in some examples, can be directed to a storage location, such as a file directory location within the storage medium 308 or another storage device connected directly to the SLA reporting platform server 302 or accessible to the SLA reporting platform server 302 via the network 306. The output can, in some examples, be formatted for display upon the user interface 312 or within a web server template (e.g., an intranet site accessible to the client).

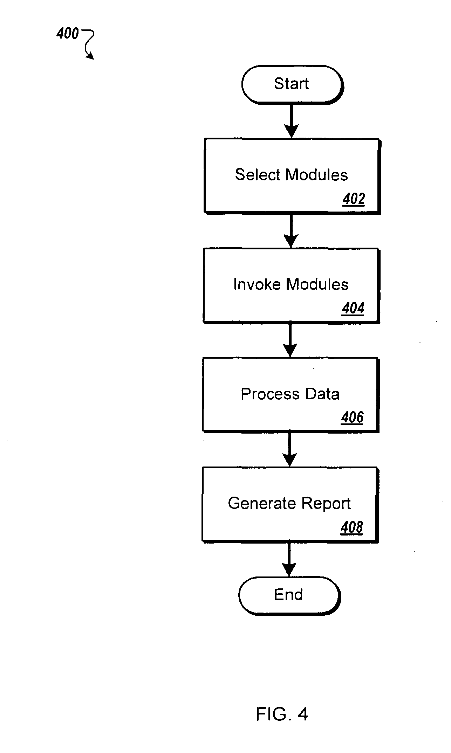

FIG. 4 is a flow chart illustrating one method 400 in accordance with various general implementations. Briefly, a SLA report generation process is automated using a list of SLA report requirements and a collection of pre-defined data modules. When the report generation process is then invoked, one or more data modules are mapped to each SLA report requirement, and the data modules are invoked to generate data metrics for the SLA report. The execution of the SLA report generation process ends with the creation of a SLA report document or documents.

In more detail, when the method 400 begins (action 402), one or more data modules are selected from a collection of reusable data modules. The selected data modules collectively map to one or more SLA report requirements. The report requirements can describe performance measures or map to client expectations. One or more of the SLA report requirements, for example, can map to agreements listed within a SLA contract.

Each of the reusable data modules can include code that, when executed, imports one or more data sets from one or more data sources. For example, the reusable data modules can include tags that reference data sets stored in two or more data sources. The data modules can also include instructions for processing the imported data.

The data modules are invoked (action 404). If a user has specified an order in which the data modules are to be invoked, the data modules are invoked in the order specified by the user input. Otherwise, the data modules can be invoked in the order in which the data modules mapped to the SLA report requirements. Invocation of a data module may include loading, running, executing, referencing, or calling the data module.

During the invocation of each data module, data can be imported from a variety of data sources referenced by tags within the data modules. The data sources can include, in some examples, a learning management system (LMS), an online survey database, or a standalone spreadsheet. The tags, for example, can provide database login information, website URL information, or file server storage location information.

Data referenced by the tags is processed according to instructions within each data module (action 406). One or more data modules can include instructions for sanitizing the imported data. For example, data received from different sources can include different formatting. Instructions included within a data module can reformat imported data into a format which can be combined, queried, collated, or otherwise manipulated with data imported from other sources. In some implementations, data imported from the data sources can be stored within a spreadsheet application or relational database application for processing.

During the processing of data, operations can include performing a filtering operation, an ordering operation, a grouping operation, a collating operation, or a counting operation. If a threshold value has been included within a data module or entered by a user for use by a data module, the threshold value can be used to perform a thresholding operation. The processing of data within the data modules generates a set of metrics (e.g., values, data sets, or sets of data records) for presentation with the SLA report.

In some implementations, processed data is provided from a first data module to a second data module. For example, an interim data module can import data from one or more sources and process that data to achieve a first result (e.g., value, data set, or set of data records). A second data module can process the first result, along with, optionally, data imported by the second data module to achieve a second result. The second result can optionally be provided to a third data module and so on.

Once the data modules have executed, the SLA report is generated (action 408). For example, the SLA report requirements can include instructions regarding the compilation and presentation of metrics generated by the various data modules. In some examples, the instructions can include a SLA report document template for use in presenting the results, a location for storing the SLA report metrics, or a web-based server location for uploading the SLA report metrics.

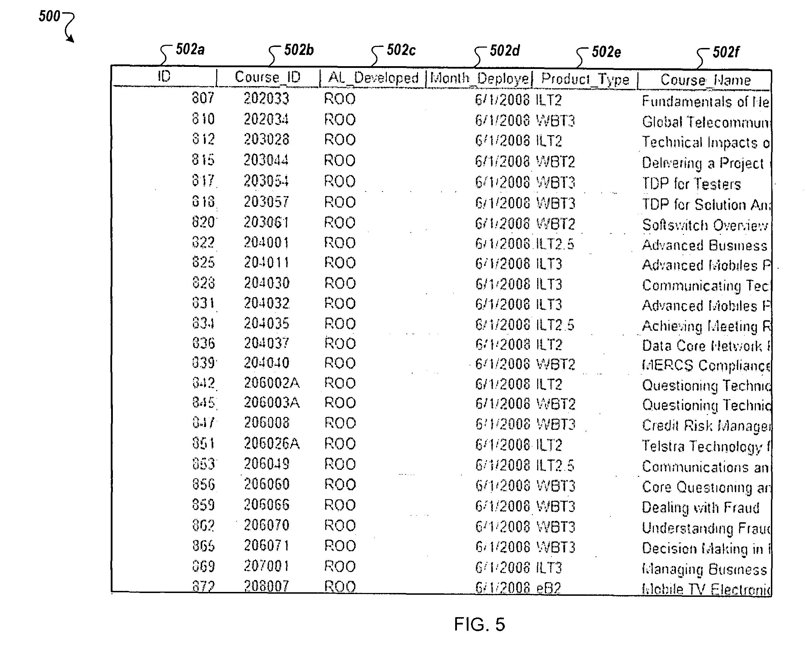

FIGS. 5 through 8 illustrate example data sets. The data included within each data set, for example, can be imported by a data module (e.g., the data modules 106 as described in relation to FIG. 1). In some examples, each data set can be formatted as a spreadsheet or relational database table. The example data sets may contain additional fields beyond those illustrated.

FIG. 5 is an example course list data set 500. The data within the data set 500 can include information correlating to available courses within a learning management system. The data set 500 includes an identification field 502a, a course identification field 502b, a developing organization field 502c, a deployment month field 502d, a product type field 502e, and a course name field 502f.

The product type field 502e, for example, can include instructor-led training, web-based training, and combinations thereof. For example, for each course identification within the course identification field 502b, two or more records can be included, each record depicting a different deployment style of the same course. Each course can be uniquely identified, for example, through the identification field 502a. Although the course list data set 500 does not necessarily contain information which can, on its own, provide metrics to a client regarding the provision of learning management services, the course list data set 500 can be used by a data module, in combination with other data, in some examples, to enrich, collate, or group query results.

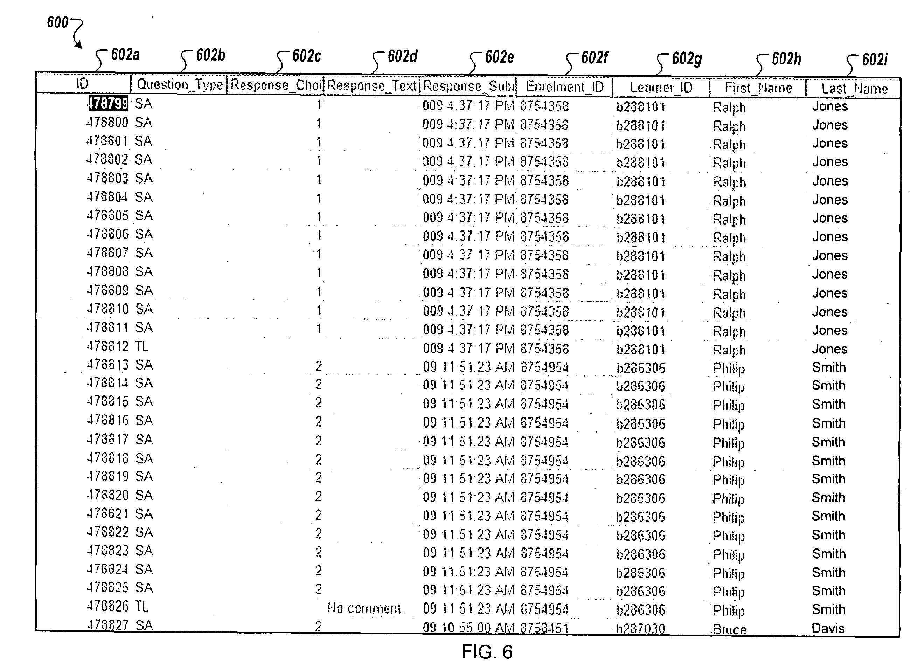

FIG. 6 is an example level one (L1) results data set 600. The data within the data set 600 can include information correlating to responses to a quiz, exam, or poll taken within a learning management system. The data set 600 includes an identification field 602a, a question type field 602b, a response choice field 602c, a response text field 602d, a timestamp field 602e, an enrollment identification field 602f, a learner identification field 602g, a first name field 602h, and a last name field 602i.

The question type field 602b, in some examples, can include multiple choice, short answer, true/false, or numeric value. For each entry, the question response information (e.g., the response choice 602c and the response text 602d) is associated with a particular learner, uniquely identified within the data set 600 by the learner identification 602g, as well as a combination of the first name 602h and the last name 602i. Although the level 1 data set 600 may not necessarily contain information which can, on its own, provide metrics to a client regarding the provision of learning management services, the level 1 data set 600 can be used by a data module, in combination with other data, generate meaningful performance metrics.

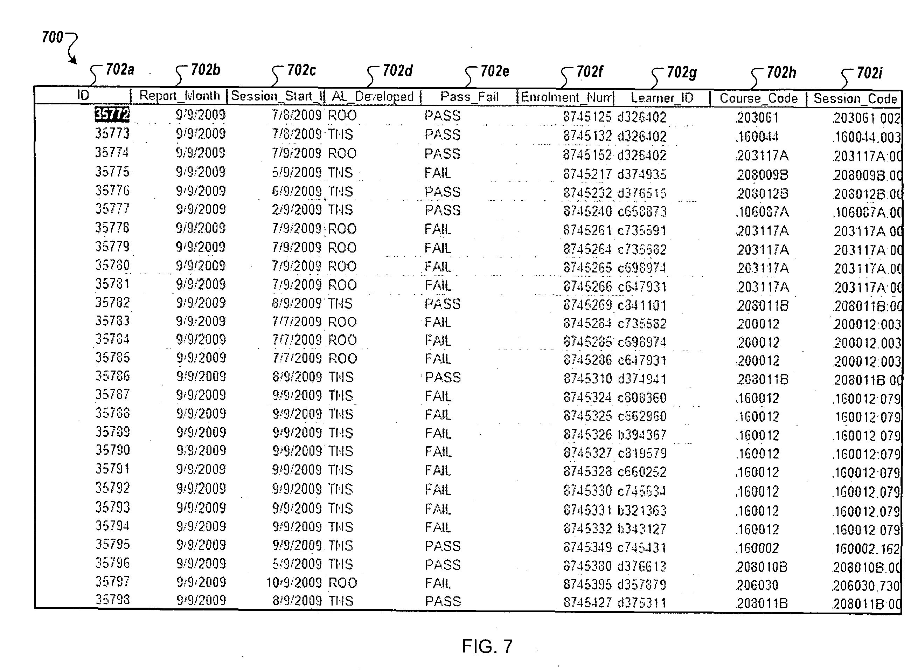

FIG. 7 is an example level two (L2) results data set 700. In some examples, the data set 700 can be formatted as a spreadsheet or relational database table. The data within the data set 700 can include information correlating to the grading of a quiz or exam taken within a learning management system. For example, the L2 results data set 700 can correspond to the grading of the responses listed within the L1 data set 600. The data set 700 includes an identification field 702a, a report month field 702b, a session timestamp field 702c, a developing organization field 702d, a pass/fail field 702e, an enrollment identification field 702f, a learner identification field 702g, a course code field 702h, and a session field 702i.

The enrollment identification field 702f can correspond to the enrollment identification field 602f (as shown in FIG. 6), while the learner identification field 702g can correspond to the learner identification field 602g. Similarly, the course code field 702h can correspond to the course identification field 502b (as shown in FIG. 5). In one example, the level 2 data set 700 can be used by a data module to provide metrics to a client regarding the provision of learning management services, such as the percentage of participants passing a particular course (e.g., using the course code field 702h) within a particular month (e.g., using the session timestamp field 702c). In another example, the level 2 data set 700 can be used by a data module, in combination with the course list data set 500, to generate a metric regarding the pass/fail rate per course enhanced by course name (e.g., by correlating the course code within course code field 702h with the course identification number within the course identification field 502b of the course list data set 500). In some implementations, sanitizing the data for the previous example includes mapping a field named "course identification" (e.g., the course identification field 502b) to a field name "course code" (e.g., the course code field 702h).

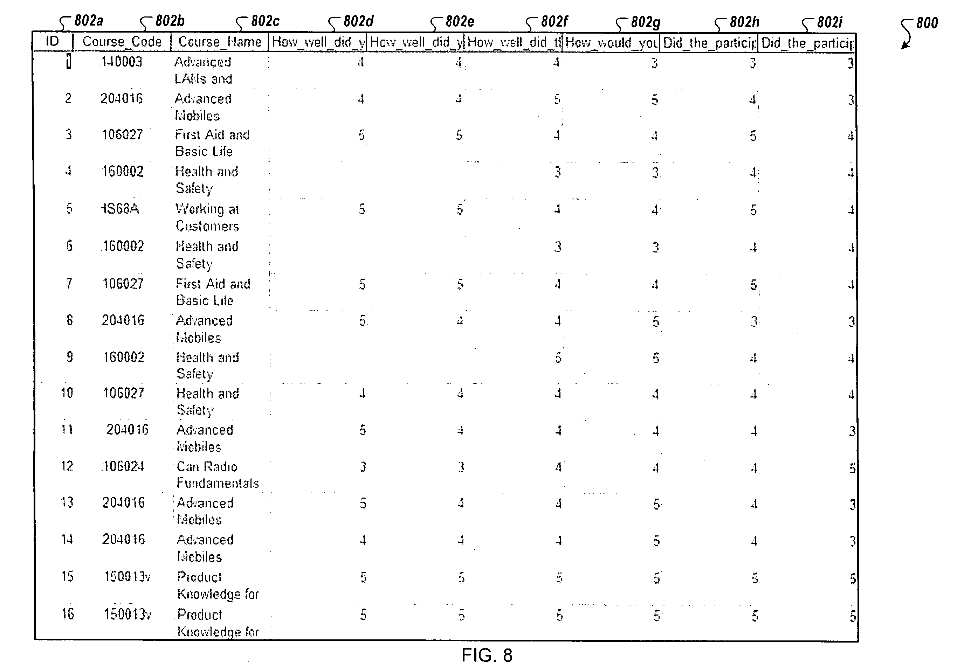

FIG. 8 is an example instructor feedback data set 800. The data within the instructor feedback data set 800 can include information correlating to a satisfaction survey or poll taken by the instructor of a course within a learning management system. The instructor feedback data set 800 includes an identification field 802a, a course code field 802b, a course name field 802c, and survey response fields 802d through 802i.

The course code field 802b of the instructor feedback data set 800 can correspond to the course code field 702h (as shown in FIG. 7) or the course identification field 502b (as shown in FIG. 5). Similarly, the course name field 802c can correspond to the course name field 502f. In one example, the instructor feedback data set 800 can be used by a data module to provide metrics to a client regarding relative instructor satisfaction between different styles of presentation of a same course (e.g., classroom instruction versus web-based instruction). In another example, if the instructor feedback data set 800 included a session code or session start time field to correlate to the L2 results data set 700, the instructor feedback data set 800 could be used by a data module, in combination with the L2 results data set 700, to generate a metric contrasting the pass/fail rate of a particular course depending upon the instructor of the course.

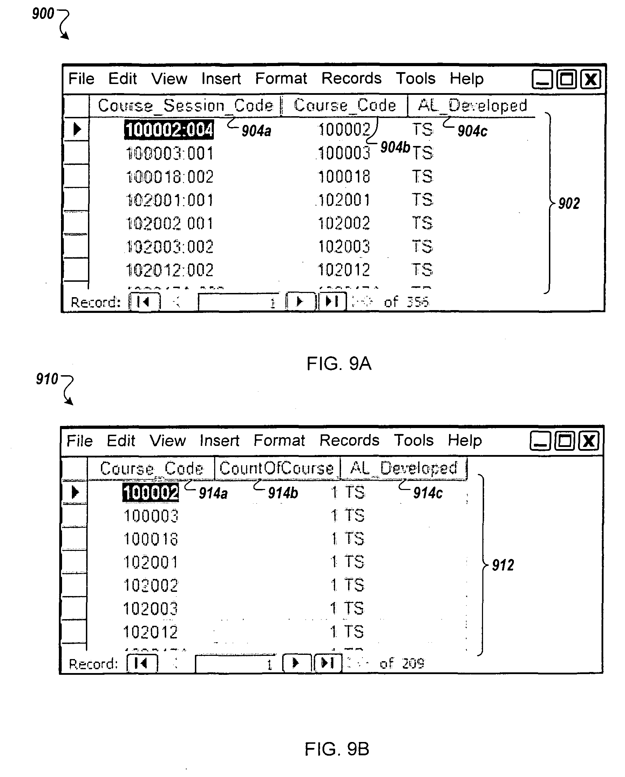

FIGS. 9A-9D illustrate a first reusable data module retrieving information fulfilling a first requirement related to a SLA. The reusable data module, for example, can import data from a variety of data sources, sanitize the data to a standard format, process the data, and output a metric corresponding to all available courses in which L1 results data is available for greater than a threshold value X number of sessions, held over a set period of time (e.g., the SLA reporting period).

As shown in FIG. 9A, a data import interface 900 illustrates, for example, a resultant data set 902 obtained from importing the course list data set 500 (as shown in FIG. 500) and the L1 data set 600 (as shown in FIG. 600), and mapping the course identification field within the L1 data set 600 (not illustrated within FIG. 600) to the developing organization within the course list data set 500 (not illustrated within FIG. 500). The resultant data set includes a course-session code field 904a, a course code field 904b, and a developing organization field 904c.

In some examples, the actions taken to generate the resultant data set 902 can include sanitizing one or both of the data sets 500 and 600, in some examples, by reformatting the data sets 500 and 600 into a common format or mapping a field named "course ID" within one of the data sets 500 or 600 to a field named "course code". The data sets 500 and 600 can be imported from the same data source or from different data sources.

As illustrated in FIG. 9B, a data processing interface 910 includes a filtered data set 912 obtained from mapping, ordering, grouping, and counting the resultant data set 902 (as shown in FIG. 9A) based upon the field course-session code 904a. The filtered data set 912 includes a course code field 914a, a count-of-course field 914b, and a developing organization field 914c. The processing of the resultant data set 902, in some implementations, can be accomplished with a database application or a spreadsheet application.

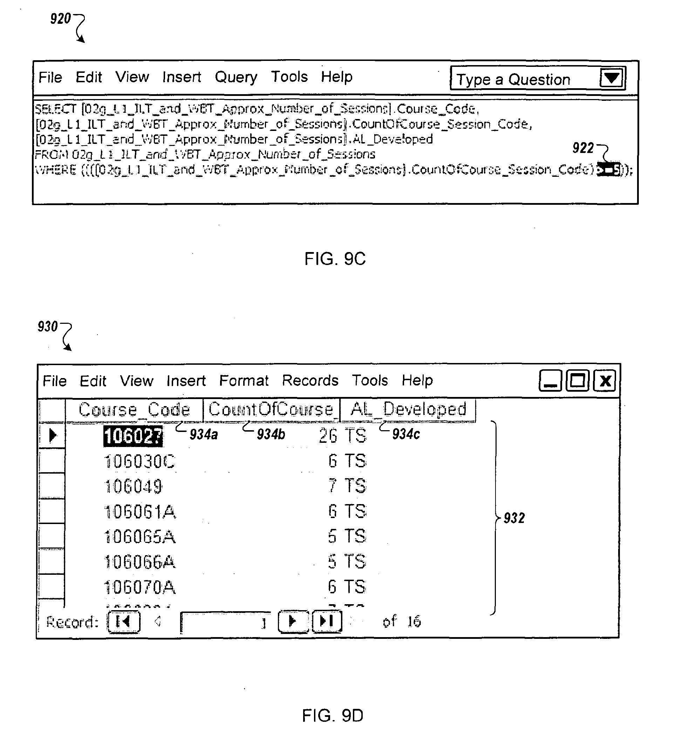

FIG. 9C illustrates an example script 920 which can be used to perform a thresholding operation upon the filtered data set 912 (as shown in FIG. 9B). In some implementations, the example script 920 can be generated based upon a generic version of the example script 920 being provided with a threshold value 922. For example, prior to the execution of the data module, a user can provide a threshold value for use with this module. In the illustrated example, the thresholding operation can count the number of sessions offered per course for each course (e.g., unique course code within the course code field 914a) listed within the filtered data set 912, and limit the output of the thresholding operation to only those courses which have been offered five or more times (e.g., the threshold value 922 is set to "5").

In FIG. 9D, an output interface 930 includes the course count module output 932 of the thresholding operation performed in relation to FIG. 9C. The course count module output 932 includes a course code field 934a, a count-of-course field 934b, and a development organization field 934c. The course count module output 932, in some examples, can be added to the contents of a SLA report or provided to another data module for additional processing.

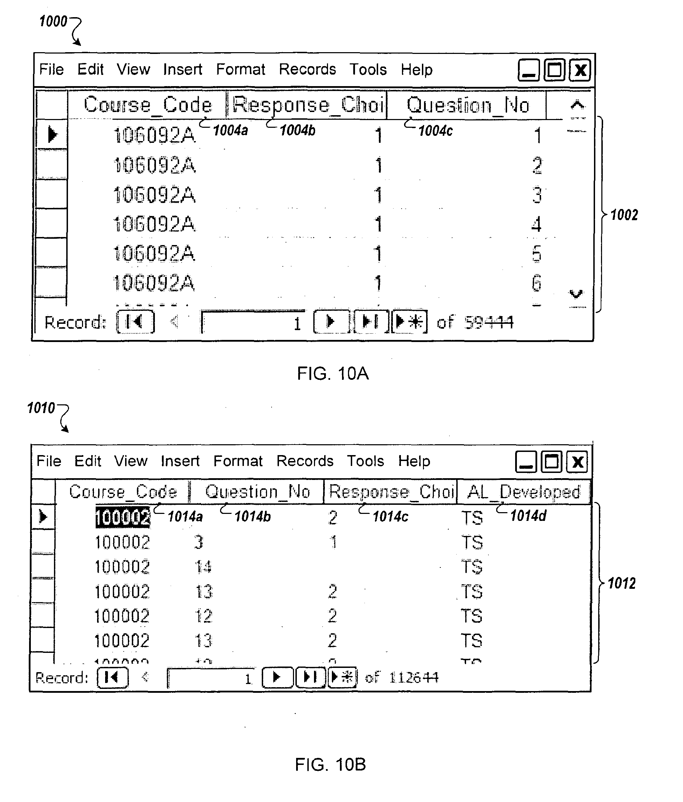

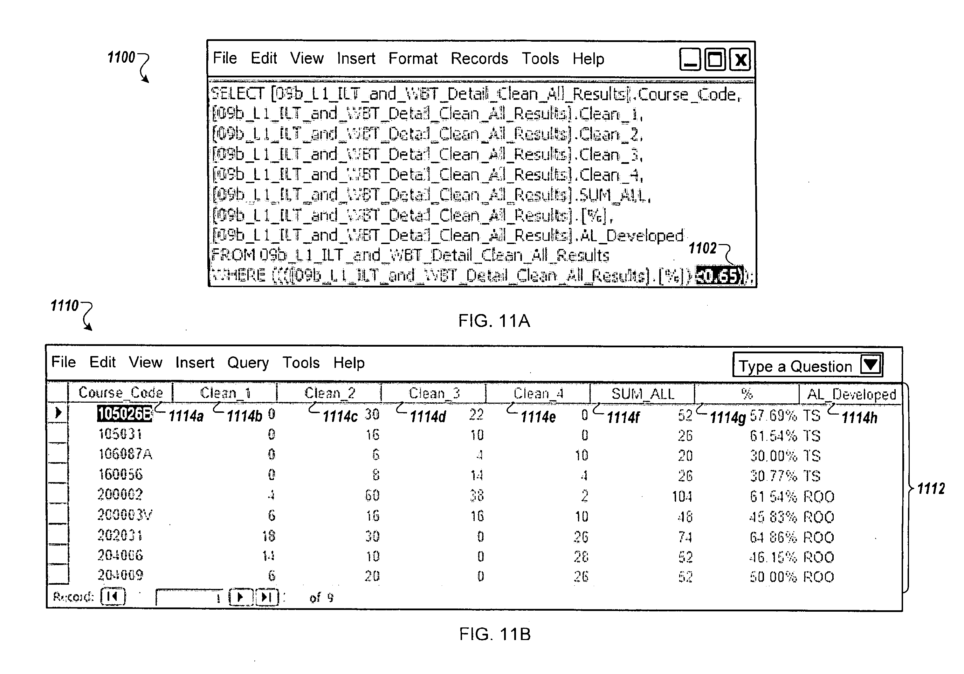

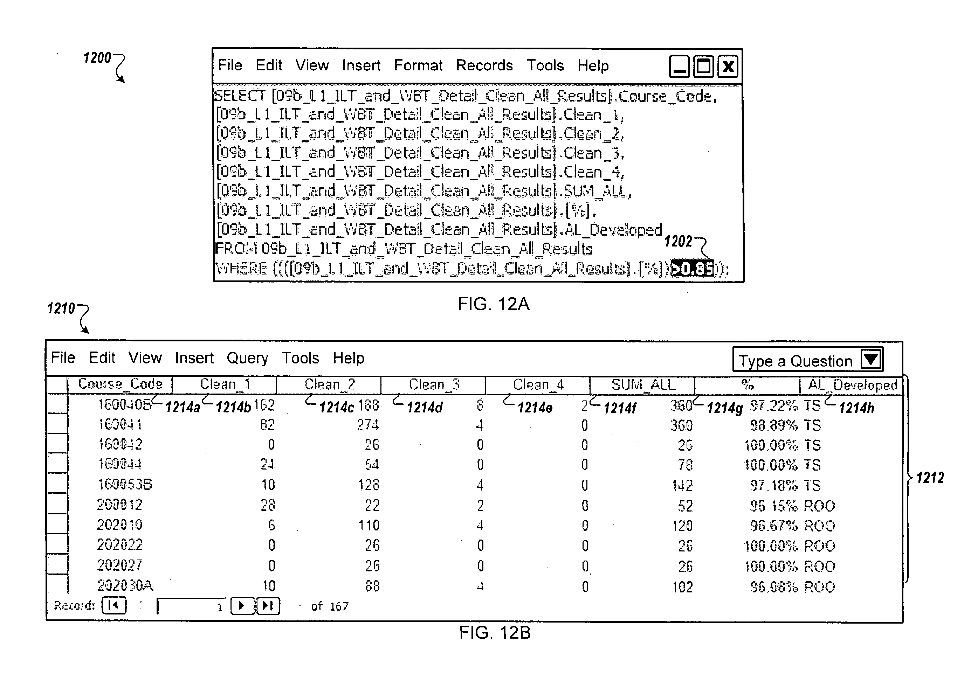

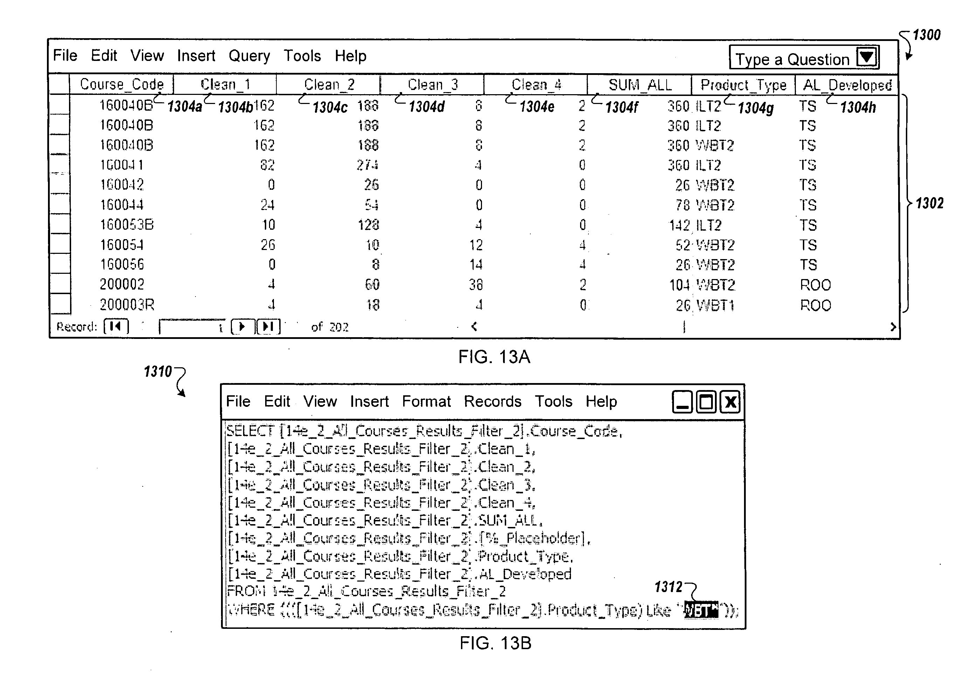

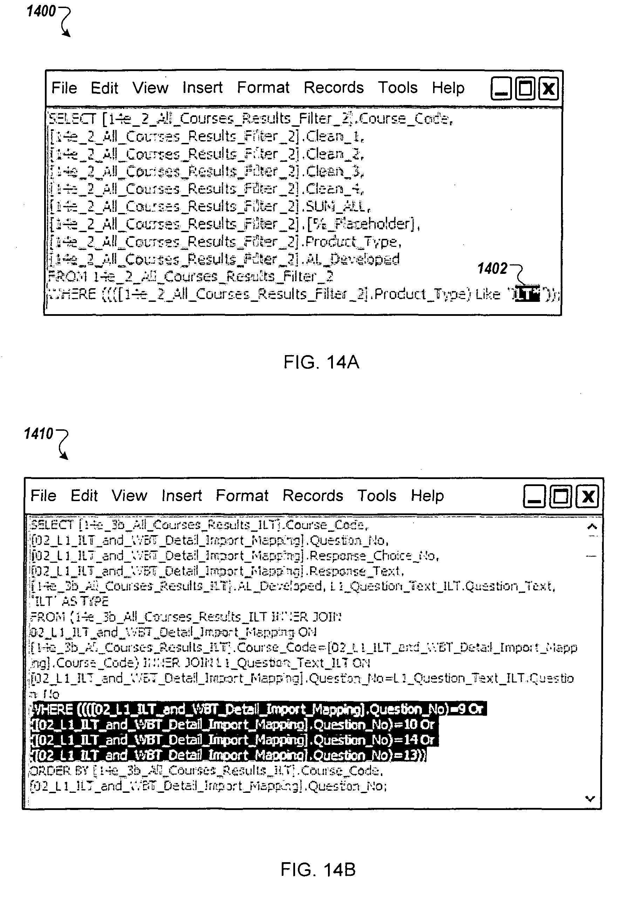

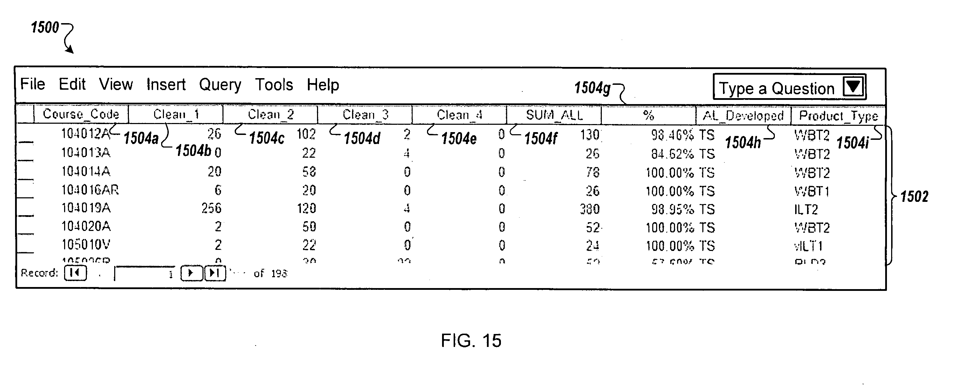

FIGS. 10A-10F illustrate a first common reusable data module retrieving information corresponding to data needed by one or more additional reusable data modules. For example, the common reusable data module can be used by an all courses receiving less than a threshold satisfaction data module (as illustrated in FIGS. 11A and 11B), an all courses receiving greater than a threshold satisfaction data module (as illustrated in FIGS. 12A and 12B), an all web-based course results data module (as illustrated in FIGS. 13A through 13D), an all classroom-based course results data module (as illustrated in FIGS. 14A through 14C), and an all courses results in detail data module (as illustrated in FIG. 15).

As shown in FIG. 10A, a data import interface 1000 illustrates, for example, a resultant data set 1002 obtained from importing the L1 data set 600 (as shown in FIG. 600) and ordering and grouping the records by the course code field (not illustrated in FIG. 600). The resultant data set 1002 includes a course code field 1004a, a response choice field 1004b, and a question number field 1004c.

As illustrated in FIG. 10B, a data processing interface 1010 includes a mapped data set 1012 obtained from importing the course list data set 500 (as shown in FIG. 5) and mapping each unique course identification in the course identification field 1004a of the resultant data set 1002 (as shown in FIG. 10A) to a developing organization (e.g., using the developing organization field 502c). The course list data set 500, in other implementations, can be obtained from a local storage region, provided that the course list data set 500 has already been imported by the first reusable data module described in relation to FIGS. 9A through 9D. The mapped data set 1012 includes a course code field 1014a, a question number field 1014b, a response choice field 1014c, and a developing organization field 1014d. The processing of the resultant data set 1002 into the mapped data set 1012, in some implementations, can be accomplished with a database application or a spreadsheet application.

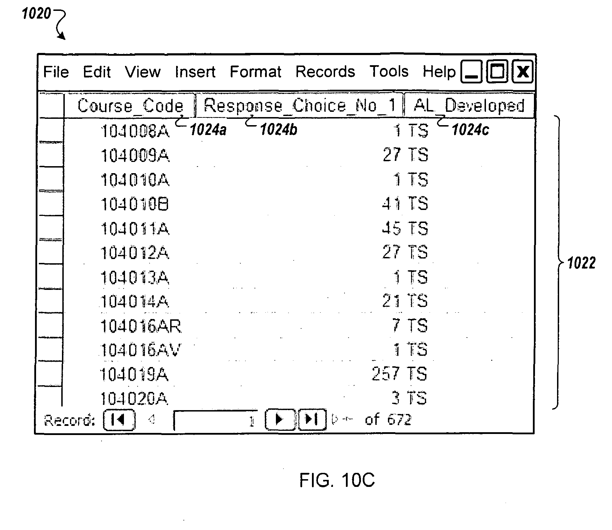

In FIG. 10C, a data processing interface 1020 includes a counted data set 1022 obtained from performing a counting operation on all responses listed within the mapped data set 1012 (as shown in FIG. 10B) based upon the response choice field 1014c. The counted data set 1022 includes a course code field 1024a, a response choice number one field 1024b, and a development organization field 1024c. Although only a single response is illustrated, the data module can generate additional counted data sets, dependent upon the number of available responses. For example, the data module can generate a total of four counted data sets corresponding to response choices 1, 2, 3, and 4.

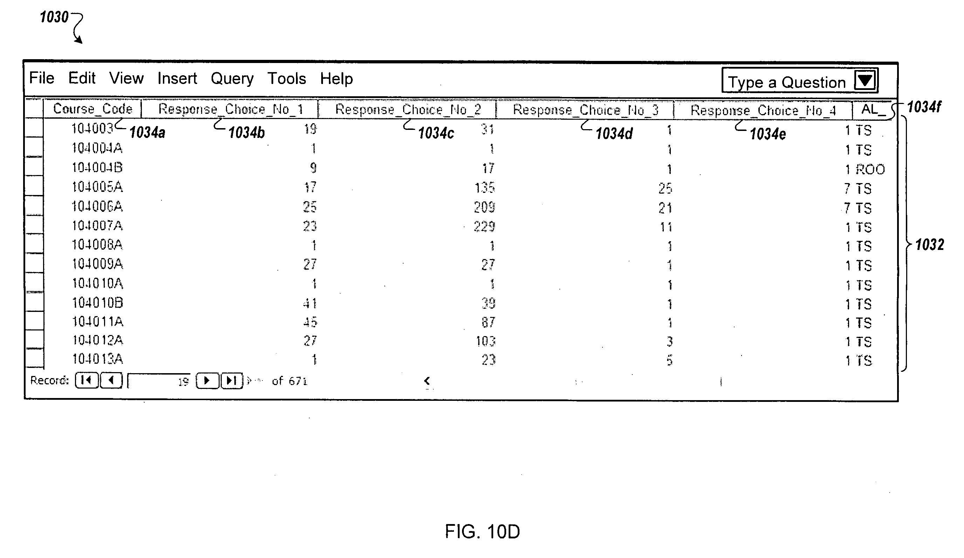

FIG. 10D illustrates a data processing interface 1030, including a collated data set 1032 obtained from performing a collating operation on the counted data set 1022 (as shown in FIG. 10C) and additional counted data sets corresponding to response choices 2, 3, and 4. The collating operation collates individual response counts by course code. The collated data set 1032 includes a course code field 1034a, a first response choice field 1034b, a second response choice field 1034c, a third response choice field 1034d, a fourth response choice field 1034e, and a developing organization field 1034f.

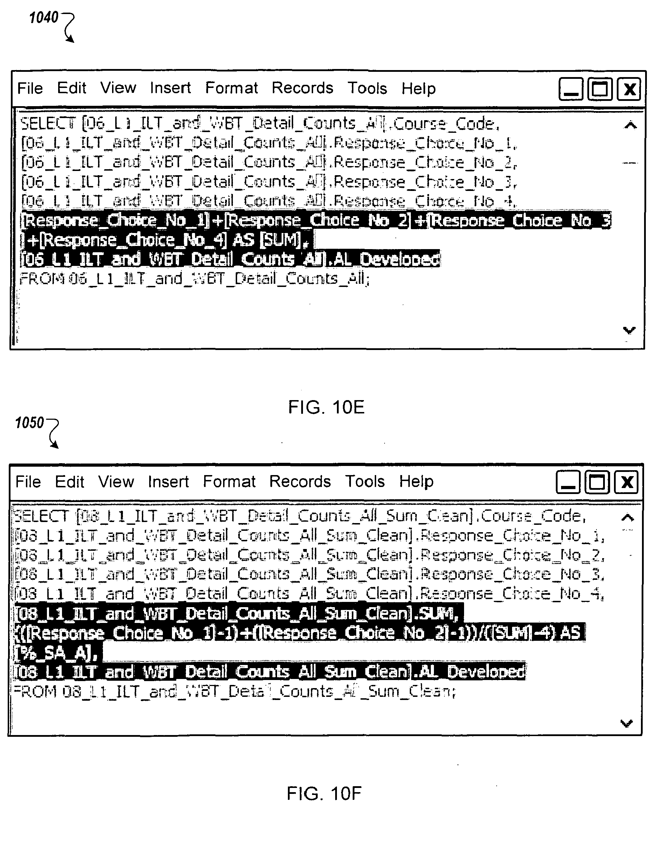

FIG. 10E illustrates an example summing script 1040 which can be used to perform a summing operation upon the collated data set 1032 (as shown in FIG. 10D). The output of the summing script 1040 includes a value per course code associated with the total number of responses.

Using the total number of responses output from the example summing script 1040 (as shown in FIG. 10E), an example percentage calculation script 1050, as shown in FIG. 10F, calculates the percentage of strongly agree and agree responses within the collated data set 1032 (as shown in FIG. 10D). The output of the example script 1050 includes a value per course code associated with the total percentage of strongly agree or agree responses (e.g., the first response choice field 1034b and the second response choice field 1034c).

FIGS. 11A-B illustrate a second reusable data module retrieving information fulfilling a second requirement related to a SLA. The second reusable data module, for example, can receive data from the first common reusable data module (as described in relation to FIGS. 10A-10F), process the data, and output a metric corresponding to all courses which received a less than X percentage satisfaction rate.

FIG. 11A illustrates an example thresholding script 1100 which can be used to perform a thresholding operation upon the collated data set 1032 (as shown in FIG. 10D), combined with the output of the summing script 1040 (as described in relation to FIG. 10E) and the percentage calculation script 1050 (as described in relation to FIG. 10F). In some implementations, the thresholding script 1100 can be generated based upon a generic version of the thresholding script 1100 being provided with a threshold value 1102. For example, prior to the execution of the data module, a user can provide a threshold value for use with this module. In the illustrated example, the thresholding operation can filter the individual courses to those having less than a sixty-five percent satisfaction rate (e.g., the threshold value 1102 is set to "0.65").

As shown in FIG. 11B, a data module output interface 1110 illustrates, for example, a resultant data set 1112 obtained from executing the thresholding script 1100 (described in relation to FIG. 11A). The resultant data set includes a course-session code field 1114a, a first response field 1114b, a second response field 1114c, a third response field 1114d, a fourth response field 1114e, a sum of all responses field 1114f, a percentage satisfactory field 1114g, and a developing organization field 1114h. The resultant data set 1112, in some examples, can be added to the contents of a SLA report or provided to another data module for additional processing.

FIGS. 12A-B illustrate a third reusable data module retrieving information fulfilling a third requirement related to a SLA. The reusable data module, for example, can receive data from the first common reusable data module (as described in relation to FIGS. 10A-10F), process the data, and output a metric corresponding to all courses which received a greater than X percentage satisfaction rate.

FIG. 12A illustrates an example thresholding script 1200 which can be used to perform a thresholding operation upon the collated data set 1032 (as shown in FIG. 10D), combined with the output of the summing script 1040 (as described in relation to FIG. 10E) and the percentage calculation script 1050 (as described in relation to FIG. 10F). In some implementations, the thresholding script 1200 can be generated based upon a generic version of the thresholding script 1200 being provided with a threshold value 1202. For example, prior to the execution of the data module, a user can provide a threshold value for use with this module. In the illustrated example, the thresholding operation can filter the individual courses to those having greater than an eighty-five percent satisfaction rate (e.g., the threshold value 1202 is set to "0.85").

As shown in FIG. 12B, a data module output interface 1210 illustrates, for example, a resultant data set 1212 obtained from executing the thresholding script 1200 (described in relation to FIG. 12A). The resultant data set includes a course-session code field 1214a, a first response field 1214b, a second response field 1214c, a third response field 1214d, a fourth response field 1214e, a sum of all responses field 1214f, a percentage satisfactory field 1214g, and a developing organization field 1214h. The resultant data set 1212, in some examples, can be added to the contents of a SLA report or provided to another data module for additional processing.

FIGS. 13A-D illustrate a fourth reusable data module retrieving information fulfilling a fourth requirement related to a SLA. The reusable data module, for example, can receive data from the first common reusable data module (as described in relation to FIGS. 10A-10F), process the data, and output a metric corresponding to the detailed results of all web-based training courses.

FIG. 13A illustrates a data processing interface 1300, including a mapped data set 1302 obtained from performing a mapping operation on the collated data set 1032 (as shown in FIG. 10D), combined with the output of the summing script 1040 (as described in relation to FIG. 10E). The mapping operation maps the course code field 1034a of the collated data set 1032 to the product type field 502e and the developing organization field 502c of the course list data set 500 (shown in FIG. 5). The course list data set 500, for example, can be obtained from a local storage region, because the course list data set 500 has already been imported by the common reusable data module described in relation to FIGS. 10A through 10E. The mapped data set 1302 includes a course code field 1304a, a first response field 1304b, a second response field 1304c, a third response field 1304d, a fourth response field 1304e, a sum of all responses field 1304f, a product type field 1304g, and a developing organization field 1304h.

FIG. 13B illustrates an example filtering script 1310 which can be used to perform a filtering operation upon the mapped data set 1302 (as shown in FIG. 13A). The filtering operation selects all records within the mapped data set 1302 which are associated with a web-based training product type (e.g., within the product type field 1304g). In some implementations, the filtering script 1310 is generated from a generic version of the filtering script 1310. For example, the user can supply a product type value 1312 to the fourth reusable data module, specifying a web-based training product type (as illustrated) or other product type (e.g., instructor-led).

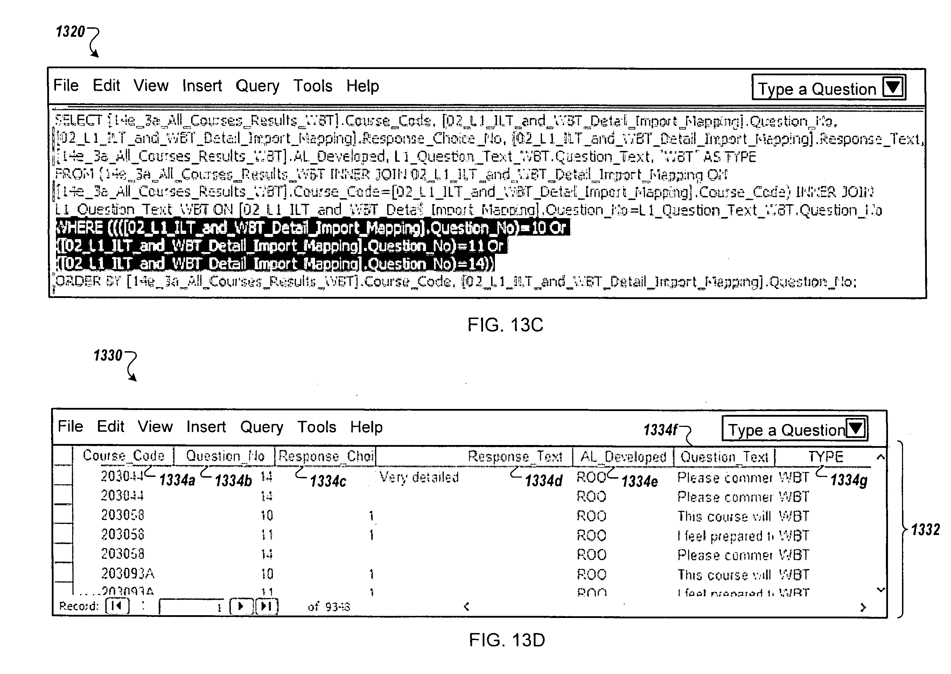

FIG. 13C illustrates an example filtering script 1320 which can be used to perform a filtering operation upon the filtered data set obtained by running the filtering script 1310 (as described in relation to FIG. 13B). The filtering operation selects a subset of the response fields of the mapped data set 1302. For example, the filtering operation selects the responses associated with questions ten, eleven, and fourteen. The selected questions, for example, may be the only questions within the data set 1302 which are associated with text answers related to a web-based training program.

As shown in FIG. 13D, a data module output interface 1330 illustrates, for example, a resultant data set 1332 obtained from executing the filtering script 1320 (described in relation to FIG. 13C). The resultant data set 1332 includes a course code field 1334a, a question number field 1334b, a response choice field 1334c, a response text field 1334d, a development organization field 1334e, a question text field 1334f and a type field 1334g. The resultant data set 1332, in some examples, can be added to the contents of a SLA report or provided to another data module for additional processing.

FIGS. 14A-C illustrate a fifth reusable data module retrieving information fulfilling a fifth requirement related to a SLA. The reusable data module, for example, can receive data from the first common reusable data module (as described in relation to FIGS. 10A-10F), process the data, and output a metric corresponding to the detailed results of all instructor-led training courses.

FIG. 14A illustrates an example filtering script 1400 which can be used to perform a filtering operation upon the mapped data set 1302 (as shown in FIG. 13A). The filtering operation selects all records within the mapped data set 1302 which are associated with an instructor-led training product type (e.g., within the product type field 1304g). In some implementations, the filtering script 1400 is generated from a generic version of the filtering script 1400 (e.g., the same script which generates the filtering script 1310 as described in relation to FIG. 13B). For example, the user can supply a product type value 1402 to the fifth reusable data module, specifying an instructor-led training product type (as illustrated) or other product type (e.g., web-based).

FIG. 14B illustrates an example filtering script 1410 which can be used to perform a filtering operation upon the filtered data set obtained by running the filtering script 1400 (as described in relation to FIG. 14A). The filtering operation selects a subset of the response fields of the mapped data set 1302. For example, the filtering operation selects the responses associated with questions nine, ten, thirteen, and fourteen. The selected questions, for example, may be the only questions within the data set 1302 which are associated with text answers related to an instructor-led training program.

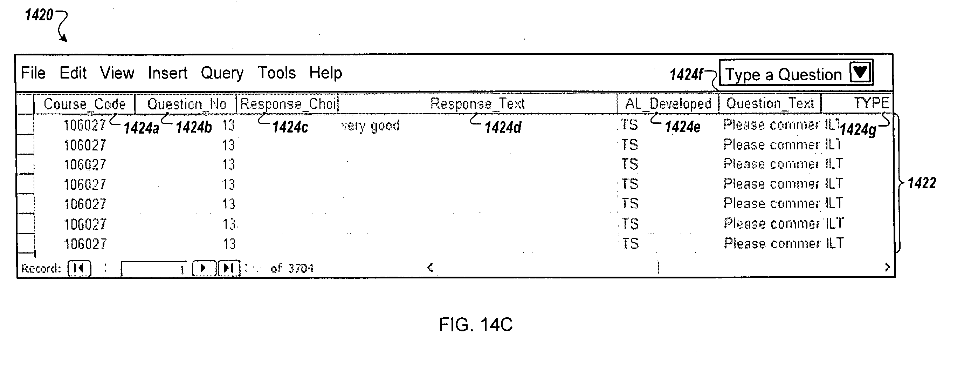

As shown in FIG. 14C, a data module output interface 1420 illustrates, for example, a resultant data set 1422 obtained from executing the filtering script 1410 (described in relation to FIG. 14B). The resultant data set 1422 includes a course code field 1424a, a question number field 1424b, a response choice field 1424c, a response text field 1424d, a development organization field 1424e, a question text field 1424f and a type field 1424g. The resultant data set 1422, in some examples, can be added to the contents of a SLA report or provided to another data module for additional processing.

FIG. 15 illustrates a sixth reusable data module retrieving information fulfilling a sixth requirement related to a SLA. The reusable data module, for example, can receive data from the first common reusable data module (as described in relation to FIGS. 10A-10F), process the data, and output a metric corresponding to all courses results in detail.

As shown in FIG. 15, a data module output interface 1500 illustrates, for example, a resultant data set 1502 obtained from mapping the results of the collated data set 1032 (as shown in FIG. 10D), combined with the output of the summing script 1040 (as described in relation to FIG. 10E) and the percentage calculation script 1050 (as described in relation to FIG. 10F) to the product type field from the course list data set 500 (e.g., imported by the interim data module as described in FIG. 10B). The resultant data set 1502 includes a course code field 1504a, a first response choice field 1504b, a second response choice field 1504c, a third response choice field 1504d, a fourth response choice field 1504e, a sum of all choices field 1504f, a percentage satisfactory field 1504g, a developing organization field 1504h, and a product type field 1504i.

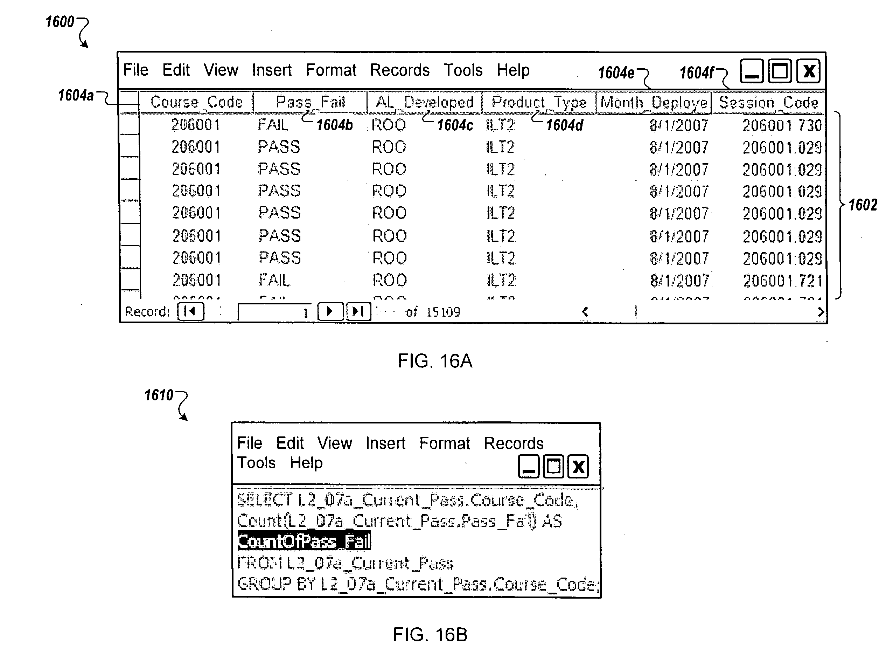

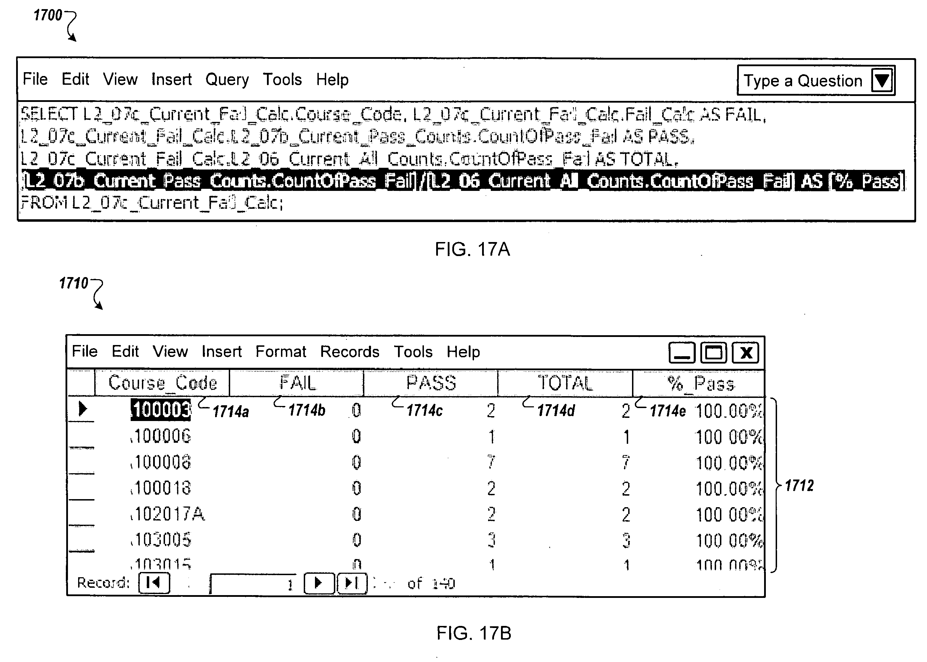

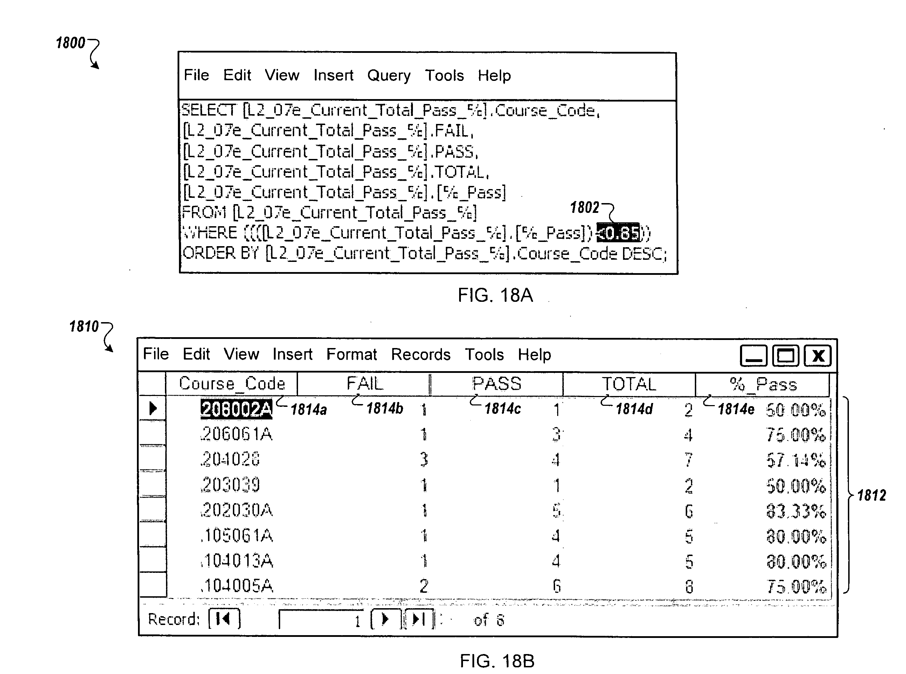

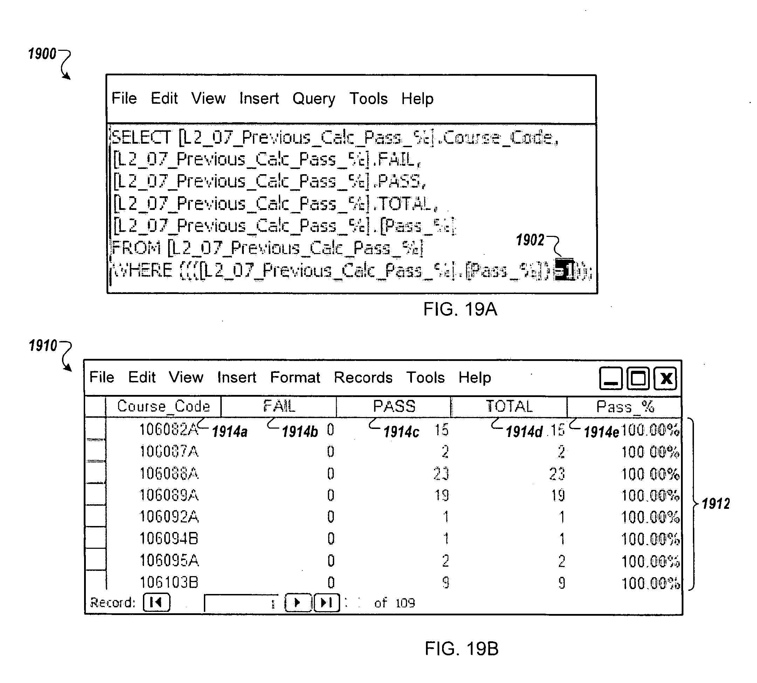

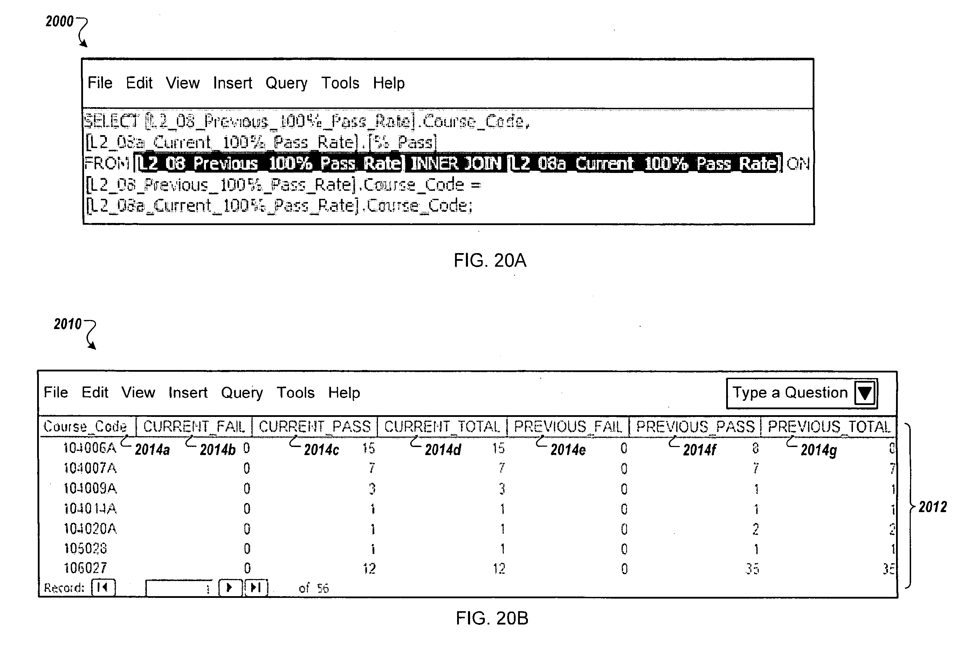

FIGS. 16A-B illustrate a second common reusable data module retrieving information corresponding to data needed by one or more additional reusable data modules. For example, the second common reusable data module can be used by a current total pass percentage data module (described in relation to FIGS. 17A and 17B), a current less than X percent passing rate data module (described in relation to FIGS. 18A and 18B), a previous one hundred percent pass rate data module (described in relation to FIGS. 19A and 19B), a current one hundred percent pass rate data module (described in relation to FIGS. 19A and 19B), and a current/past one hundred percent pass rate results detail data module (described in relation to FIGS. 20A and 20B).

Because both current and previous results are derived through the second common reusable data module, a portion of the data module can be executed first using current SLA reporting cycle data, and again using historic SLA reporting cycle data. For example, the historic SLA reporting cycle data can be cached in a local or remote area for purposes of generating the metrics provided, in part, through the second reusable data module.

FIG. 16A illustrates a data processing interface 1600, including a mapped data set 1602 obtained from performing a mapping operation on the L2 results data set 700 (as shown in FIG. 7). The mapping operation maps the course code field 702a and the developing organization field 702d to the course identification field 502a and the developing organization field 502c of the course list data set 500 (as shown in FIG. 5), to match the product type field 502e to the entries within the L2 results data set 700. The course list data set 500 and the L2 results data set 700 can be imported or accessed from a local storage area, depending upon the previous modules executed. When executing the second reusable data module to obtain information pertaining to past results (e.g., data obtained during the previous SLA reporting cycle), the historical L2 results data set can be imported from a local or remote data cache containing historical data. The mapped data set 1602 includes a course code field 1604a, a pass/fail field 1604b, a developing organization field 1604c, a product type field 1604d, a deployment month field 1604e, and a session code field 1604f.

FIG. 16B illustrates an example counting script 1610 which can be used to perform a counting operation upon the mapped data set 1602. The counting operation groups the mapped data set 1602 records by the course code field 1604a and counts the PASS instances within the pass fail field 1604b. In some implementations, a generic version of the counting script 1610 receives input (e.g., a user specification provided upon execution) regarding whether PASS instances or FAIL instances should be counted. In one example, the counting script 1610 can be executed twice, once to count PASS instances and once to count FAIL instances.

FIGS. 17A-B illustrate a seventh reusable data module retrieving information fulfilling a seventh requirement related to a SLA. The reusable data module, for example, can receive data from the second common reusable data module (as described in relation to FIGS. 16A and 16B), process the data, and output a metric corresponding to the current total pass percentage.

FIG. 17A illustrates an example collating script 1700 which can be used to perform a collating operation upon the output of the second reusable data module (e.g., the mapped data set 1602 combined with the total pass count achieved by the counting script 1610). The collating operation can collate the input, sum the total pass and fail counts, and calculate a percentage passing for each course code.

As shown in FIG. 17B, a data module output interface 1710 illustrates, for example, a resultant data set 1712 obtained from executing the collating script 1700 (described in relation to FIG. 17A). The resultant data set 1712 includes a course code field 1714a, a fail field 1714b, a pass field 1714c, a total field 1714d, and a percentage pass field 1714e. The resultant data set 1712, in some examples, can be added to the contents of a SLA report or provided to another data module for additional processing.

FIGS. 18A-B illustrate an eighth reusable data module retrieving information fulfilling an eighth requirement related to a SLA. The reusable data module, for example, can receive data from the seventh reusable data module (as described in relation to FIGS. 17A and 17B), process the data, and output a metric corresponding to current less than X percent passing rate.

FIG. 18A illustrates an example thresholding script 1800 which can be used to perform a thresholding operation upon the data set 1712 (as shown in FIG. 17B). The thresholding operation can limit the records of the data set 1712 to the courses in which less than X percent of the students failed. As illustrated, an example threshold value 1802 of 0.85 has been entered into the thresholding script 1800, for example through a user input prior to execution.

As shown in FIG. 18B, a data module output interface 1810 illustrates, for example, a resultant data set 1812 obtained from executing the thresholding script 1800 (described in relation to FIG. 18A). The resultant data set 1812 includes a course code field 1814a, a fail field 1814b, a pass field 1814c, a total field 1814d, and a percentage pass field 1814e. The resultant data set 1812, in some examples, can be added to the contents of a SLA report or provided to another data module for additional processing.

FIGS. 19A-B illustrate a ninth reusable data module retrieving information fulfilling a ninth requirement related to a SLA. The reusable data module, for example, can receive data from the seventh reusable data module (as described in relation to FIGS. 17A and 17B), process the data, and output a metric corresponding to the previous or current one hundred percent pass rate. Whether the previous pass rate or the current pass rate is computed, for example, depends upon the input data set(s).

FIG. 19A illustrates an example limiting script 1900 which can be used to perform a limit operation upon the data set 1712 (as shown in FIG. 17B). The limit operation can limit the records of the data set 1712 to those courses in which all of the students passed. As illustrated, a limit value 1902 of 1 has been entered into the limiting script 1900, for example through a user input prior to execution. In other implementations, a thresholding script computing a pass rate of greater than X percent could be used, with a thresholding value of 0.99 submitted as input.

As shown in FIG. 19B, a data module output interface 1910 illustrates, for example, a resultant data set 1912 obtained from executing the limiting script 1900 (described in relation to FIG. 19A). The resultant data set 1912 includes a course code field 1914a, a fail field 1914b, a pass field 1914c, a total field 1914d, and a percentage pass field 1914e. The resultant data set 1912, in some examples, can be added to the contents of a SLA report or provided to another data module for additional processing.

FIGS. 20A-B illustrate a tenth reusable data module retrieving information fulfilling a tenth requirement related to a SLA. The reusable data module, for example, can receive data from the ninth reusable data module (as described in relation to FIGS. 19A and 19B), process the data, and output a metric corresponding to the current/past one hundred percent pass rate results in detail.

FIG. 20A illustrates an example joining script 2000 which can be used to perform a join operation upon the data set 1912 (as shown in FIG. 19B) and the similar data set computed (e.g., by the ninth reusable data module, as described in relation to FIGS. 19A-19B) using historical data (e.g., both current and previous data sets). The join operation can append each of the fields 1914b through 1914e of the current and historic data sets to specify "current" or "fail" and join the previous and current data fields from each corresponding record (e.g., matched by the course code field 1914a) to create an adjoined record.

As shown in FIG. 20B, a data module output interface 2010 illustrates, for example, a resultant data set 2012 obtained from executing the joining script 2000 (described in relation to FIG. 20A). The resultant data set 2012 includes a course code field 2014a, a current fail field 2014b, a current pass field 2014c, a current total field 2014d, a previous fail field 2014e, a previous pass field 2014f, and a previous total field 2014g. The resultant data set 2012, in some examples, can be added to the contents of a SLA report or provided to another data module for additional processing.

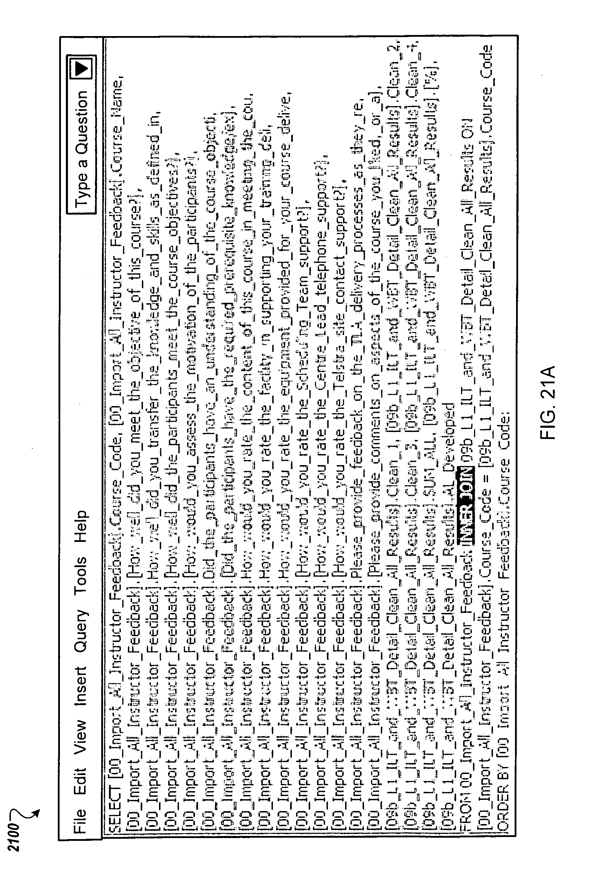

FIGS. 21A-B illustrate an eleventh reusable data module retrieving information fulfilling an eleventh requirement related to a SLA. The reusable data module, for example, can receive data from the sixth reusable data module (as described in relation to FIG. 15), process the data, and output a metric corresponding to instructor feedback matched with level one results.

FIG. 21A illustrates an example joining script 2100 which can be used to perform a join operation upon the data set 1502 (as shown in FIG. 15) and the instructor feedback data set 800 (as shown in FIG. 8). The eleventh reusable data module, for example, can import the instructor feedback data set 800 prior to processing the data.

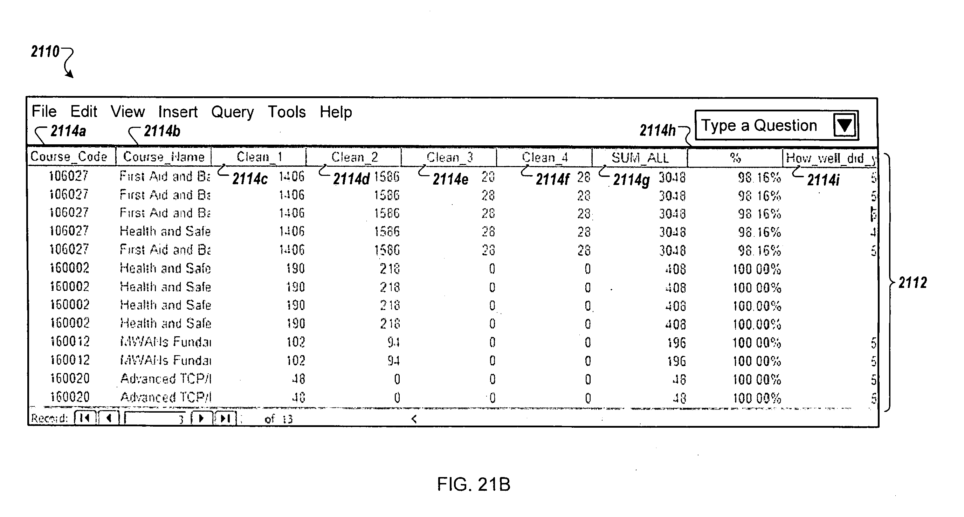

As shown in FIG. 21B, a data module output interface 2110 illustrates, for example, a resultant data set 2112 obtained from executing the joining script 2100 (described in relation to FIG. 21A). The resultant data set 2112 includes a course code field 2114a, a course name field 2114b, a first response choice field 2114c, a second response choice field 2114d, a third response choice field 2114e, a fourth response choice field 2114f, a sum of all choices field 2114g, a percentage satisfactory field 2114h, and a first instructor response field 2114i. The resultant data set 2112, in some examples, can be added to the contents of a SLA report or provided to another data module for additional processing.

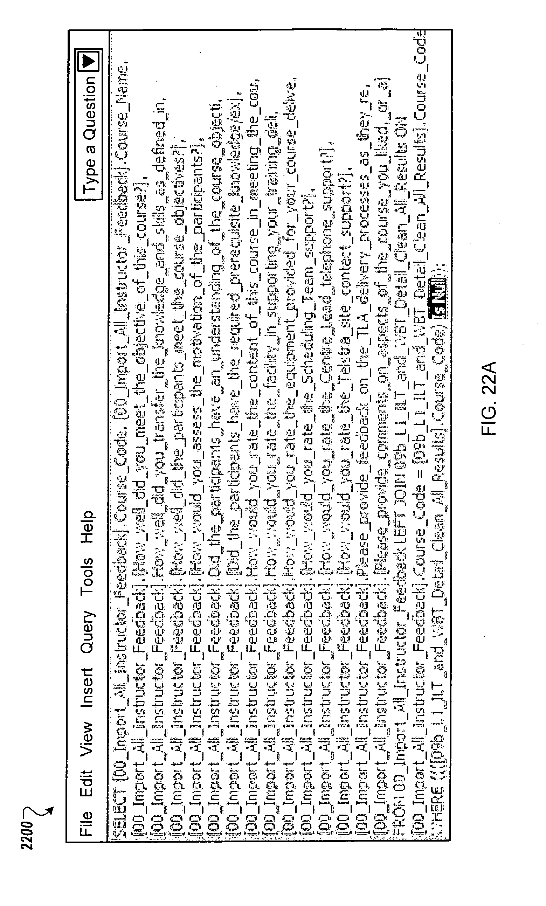

FIGS. 22A-B illustrate a twelfth reusable data module retrieving information fulfilling a twelfth requirement related to a SLA. The reusable data module, for example, can receive data from the sixth reusable data module (as described in relation to FIG_{:} 15), process the data, and output a metric corresponding to instructor feedback for courses which have no corresponding level one feedback results.

FIG. 22A illustrates an example limiting script 2200 which can be used to perform a link operation upon the instructor feedback data set based upon the contents of the level one feedback results within the resultant data set 1502 (as shown in FIG. 15), limiting the instructor feedback data set to those entries for which there are no corresponding level one feedback results. The twelfth data module, for example, can retrieve a copy of the instructor feedback data set 800 from a local cache (e.g., due to being downloaded by the eleventh reusable data module). If no cached copy exists, the twelfth data module can import the instructor feedback data set 800 prior to processing the data.

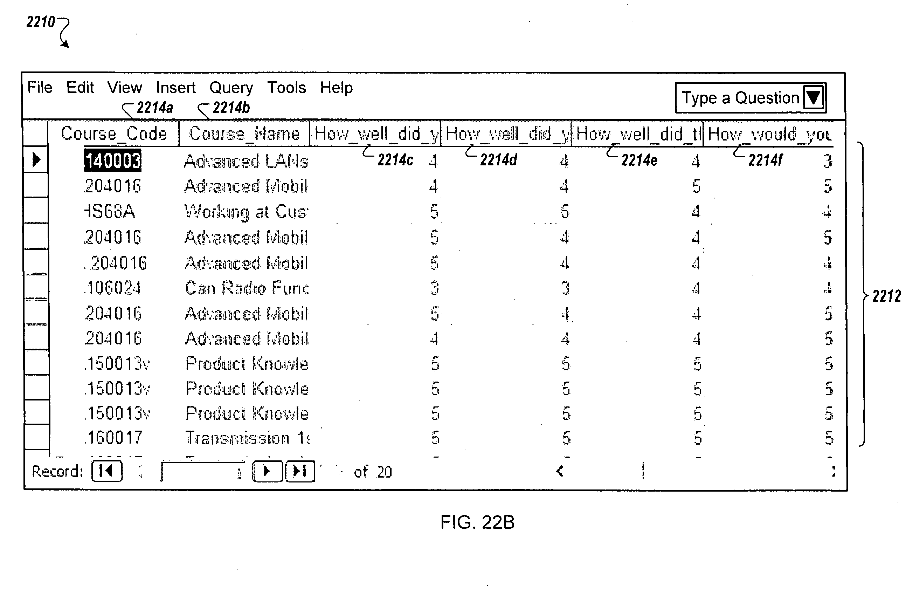

As shown in FIG. 22B, a data module output interface 2210 illustrates, for example, a resultant data set 2212 obtained from executing the limiting script 2200 (described in relation to FIG. 22A). The resultant data set 2212 includes a course code field 2214a, a course name field 2214b, a first response choice field 2214c, a second response choice field 2214d, a third response choice field 2214e, and a fourth response choice field 2214f. The resultant data set 2212, in some examples, can be added to the contents of a SLA report or provided to another data module for additional processing.

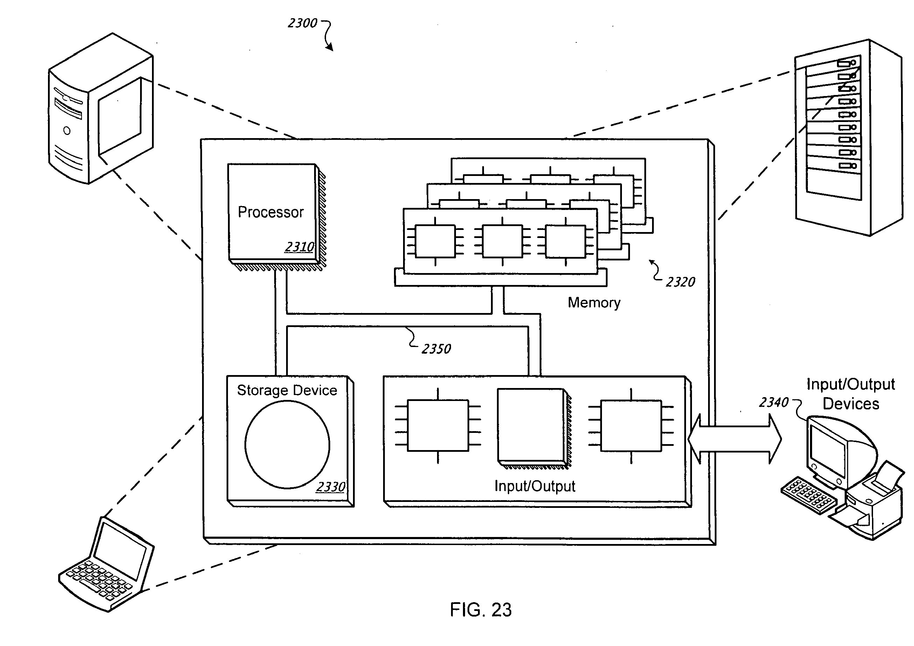

FIG. 23 is a schematic diagram of an exemplary computer system 2300. The system 2300 may be used for the operations described in association with the method 200 or the method 400 according to one implementation. For example, the system 2300 may be included in any or all of the server 102 (as shown in FIG. 1), the server 302, or the client devices 304a, 304b, and 304c (as shown in FIG. 3).

The system 2300 includes a processor 2310, a memory 2320, a storage device 2330, and an input/output device 2340. Each of the components 2310, 2320, 2330, and 2340 are interconnected using a system bus 2350. The processor 2310 is capable of processing instructions for execution within the system 2300. In one implementation, the processor 2310 is a single-threaded processor. In another implementation, the processor 2310 is a multi-threaded processor. The processor 2310 is capable of processing instructions stored in the memory 2320 or on the storage device 2330 to display graphical information for a user interface on the input/output device 2340.

The memory 2320 stores information within the system 2300. In one implementation, the memory 2320 is a computer-readable medium. In one implementation, the memory 2320 is a volatile memory unit. In another implementation, the memory 2320 is a non-volatile memory unit.

The storage device 2330 is capable of providing mass storage for the system 2300. In one implementation, the storage device 2330 is a computer-readable medium. In various different implementations, the storage device 2330 may be a floppy disk device, a hard disk device, an optical disk device, or a tape device.

The input/output device 2340 provides input/output operations for the system 2300. In one implementation, the input/output device 2340 includes a keyboard and/or pointing device. In another implementation, the input/output device 2340 includes a display unit for displaying graphical user interfaces.

The features described may be implemented in digital electronic circuitry, or in computer hardware, firmware, software, or in combinations of them. The apparatus may be implemented in a computer program product tangibly embodied in an information carrier, e.g., in a machine-readable storage device for execution by a programmable processor; and method steps may be performed by a programmable processor executing a program of instructions to perform functions of the described implementations by operating on input data and generating output. The described features may be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, in a computer to perform a certain activity or bring about a certain result. A computer program may be written in any form of programming language, including compiled or interpreted languages, and it may be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

To provide for interaction with a user, the features may be implemented on a computer having a display device such as a CRT (cathode ray tube) or LCD (liquid crystal display) monitor for displaying information to the user and a keyboard and a pointing device such as a mouse or a trackball by which the user may provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system may be connected by any form or medium of digital data communication such as a communication network. Examples of communication networks include, e.g., a LAN, a WAN, and the computers and networks forming the Internet.

The computer system may include clients and servers. A client and server are generally remote from each other and typically interact through a network, such as the described one. The relationship of client and server arises by virtue of computer programs running on the respective computers and having a client-server relationship to each other.

Although a few implementations have been described in detail above, other modifications are possible. In addition, the logic flows depicted in the figures do not require the particular order shown, or sequential order, to achieve desirable results. In addition, other actions may be provided, or actions may be eliminated, from the described flows, and other components may be added to, or removed from, the described systems. Accordingly, other implementations are within the scope of the following claims.

A number of implementations have been described. Nevertheless, it will be understood that various modifications may be made without departing from the scope of the disclosure. Accordingly, other implementations are within the scope of the following claims.

## Claims

1. A computer-implemented method comprising:
selecting one or more data modules from among a collection of reusable data modules, the selected data modules collectively mapping to one or more requirements of a service level agreement report, and the selected data modules including tags that reference data stored in two or more data sources and further including instructions for processing the data;
invoking the data modules;
processing the data referenced by the tags using the instructions, responsive to invoking the data modules; and
generating the service level agreement report in accordance with the requirements, using the processed data.

2. The method of claim 1, further comprising:
mapping the requirements of the service level agreement report to the selected data modules; and/or
further comprising:
receiving a user input specifying an order in which the data modules are to be invoked,
wherein the data modules are invoked in the order specified by the user input; and/or
further comprising:
providing the service level agreement report for display.

3. The method of claim 1, wherein:
the one or more requirements include a first requirement which specifies that a particular metric is to be provided in the service level agreement report, and
the particular metric is obtained using data from a first data source and using data from a second data source; and/or
wherein:
the one or more requirements include a first requirement which specifies that a particular query result is to be provided in the service level agreement report, and
the particular query result is obtained using data from a first data source and using data from a second data source.

4. The method of any one of claims 1 to 3, wherein the two or more data sources are different types of data sources, and further comprise two or more of a learning management system (LMS), an online survey database, and a standalone spreadsheet.

5. The method of any one of claims 1 to 4, wherein processing the data using the instructions further comprise importing the data from the two or more data sources referenced by the tags.

6. The method of any one of claims 1 to 5, wherein selecting the data modules further comprises:
selecting a first data module and a second data module that collectively map to a first requirement of the service level agreement report, and
selecting the first data module and a third data module that collectively map to a second, different requirement of the service level agreement report.

7. The method of any one of claims 1 to 6, wherein processing the data further comprises:
mapping data from a first data source to data from the second data source; and
generating a query result using the mapped data.

8. The method of claim 7, wherein processing the data further comprises performing a filtering operation on the query result; and/or
wherein processing the data further comprises performing an ordering operation on the query result; and/or
wherein processing the data further comprises performing a grouping operation on the query result; and/or
wherein processing the data further comprises performing a counting operation on the query result; and/or
wherein processing the data further comprise performing a collating operation on the query result.

9. The method of any one of claims 7 to 8, further comprising:
obtaining a threshold value that has been entered by a user,
wherein processing the data further comprises performing a thresholding operation on the query result.

10. The method of any one of claims 1 to 9, wherein processing the data further comprises:
generating a first result of processing the data referenced by the tags using the instructions included in a first data module;
generating a second result of processing the first result using the instructions included in a second data module;
generating a third result of processing the second result using the instructions included in a third data module; and
providing the third result, as the processed data.

11. The method of any one of claims 1 to 10, further comprising:
using the at least a portion of the selected data modules and one or more other data modules of the collection to generate a second service level agreement report in accordance with different requirements.

12. A system comprising:
one or more computers; and
a computer-readable medium coupled to the one or more computers having instructions stored thereon which, when executed by the one or more computers, cause the one or more computers to perform operations comprising:
selecting one or more data modules from among a collection of reusable data modules, the selected data modules collectively mapping to one or more requirements of a service level agreement report, and the selected data modules including tags that reference data stored in two or more data sources and further including instructions for processing the data;
invoking the data modules;
processing the data referenced by the tags using the instructions, responsive to invoking the data modules; and
generating the service level agreement report in accordance with the requirements, using the processed data.

13. The system of claim 12, wherein the instructions when executed by the one or more computers, cause the one or more computers to perform the method according to any one of claims 1 to 11.

14. A computer storage medium encoded with a computer program, the program comprising instructions that when executed by a data processing apparatus cause the data processing apparatus to perform operations comprising:
selecting one or more data modules from among a collection of reusable data modules, the selected data modules collectively mapping to one or more requirements of a service level agreement report, and the selected data modules including tags that reference data stored in two or more data sources and further including instructions for processing the data;
invoking the data modules;
processing the data referenced by the tags using the instructions, responsive to invoking the data modules; and
generating the service level agreement report in accordance with the requirements, using the processed data.

15. The computer storage medium of claim 14, wherein the instructions when executed by the data processing apparatus cause the data processing apparatus to perform the method according to any one of claims 1 to 11.
